(19) Europäisches Patentamt
European Patent Office
Office européen des brevets

(11) Numéro de publication : **0 328 466 B1**

# (12) FASCICULE DE BREVET EUROPEEN

(45) Date de publication du fascicule du brevet : **29.04.92 Bulletin 92/18**

(21) Numéro de dépôt : **89420033.6**

(22) Date de dépôt : **03.02.89**

(51) Int. Cl.$^5$ : **A01N 25/02,** A01N 25/04, A01N 33/12, A01N 43/50, A01N 43/52, A01N 43/653, A01N 43/78, A01N 43/90, A01N 47/18, A01N 47/36, A01N 47/38

## (54) Concentrés émulsionnables de matières biocides, les microémulsions aqueuses obtenues et l'application de ces microémulsions au traitement du bois.

(30) Priorité : **08.02.88 FR 8801660**

(43) Date de publication de la demande : **16.08.89 Bulletin 89/33**

(45) Mention de la délivrance du brevet : **29.04.92 Bulletin 92/18**

(84) Etats contractants désignés : **AT BE CH DE ES FR GB GR IT LI LU NL SE**

(56) Documents cités :
**EP-A- 0 092 457**
**EP-A- 0 095 242**
**EP-A- 0 148 526**
**EP-A- 0 189 844**
**BE-A- 904 660**
**FR-A- 2 472 341**
**B.A. RICHARDSON: "Wood preservation", 1978, pages 167-168, The Construction Press, Lancaster, GB**

(73) Titulaire : **XYLOCHIMIE**
**7-11, Boulevard de Courbevoie**
**F-92521 Neuilly-sur-Seine Cedex (FR)**

(72) Inventeur : **Radtke, Damien**
**Les Quintanières**
**F-81160 Saint Juery (FR)**
Inventeur : **Wozniak, Edmond**
**39 route de Saix**
**Vivier les Montagnes F-81290 Labruguiere (FR)**

(74) Mandataire : **Hasenrader, Hubert et al**
**Cabinet BEAU DE LOMENIE 55, rue d'Amsterdam**
**F-75008 Paris (FR)**

EP 0 328 466 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des concentrés organiques liquides permettant la préparation de microémulsions aqueuses biocides destinées à la protection des bois fraîchement abattus et sciés. L'invention concerne également les microémulsions aqueuses obtenues par addition d'eau auxdits concentrés. L'invention concerne encore l'emploi desdites microémulsions pour assurer la protection des bois fraîchement abattus et sciés contre au moins le bleuissement fongique du bois en profondeur et le développement des moisissures en surface du bois.

Depuis de nombreuses années, on sait protéger le bois en l'imprégnant par trempage ou pulvérisation de substances fongicides et/ou insecticides. La matière active, choisie de préférence insoluble dans l'eau, est dissoute par exemple dans un milieu liquide approprié pour former un concentré. Le milieu de dissolution comprend habituellement un ou plusieurs solvants organiques de la matière active, en mélange éventuellement avec une ou plusieurs huiles et/ou avec un ou plusieurs agents de fixation. Au moment de son emploi pour imprégner le bois à traiter, le concentré liquide est dilué avec de l'eau et agité de manière à produire une émulsion et c'est cette émulsion qui est appliquée en définitive sur la surface à traiter.

Les bois frais regorgent de sève riche en substances facilement assimilables qui créent un appel trophique vis à vis d'organismes biologiques divers dont, en particulier, les agents responsables du bleuissement fongique et les agents responsables de moisissures. Les agents responsables du bleuissement consistent notamment dans des champignons imparfaits cellulolytiques qui peuvent se développer rapidement et pénétrer profondément dans les cellules des rayons du bois et dont le mycélium est de couleur foncée ; si les dégats occasionnés n'ont aucune incidence néfaste sur les propriétés physico-mécaniques du bois, par contre les qualités esthétiques de l'aubier sont fortement altérées ; comme exemples de pareils champignons, on citera : AUREOBASIDIUM PULLULANS, SCLEROPHOMA PITYOPHILA et HORMONEMA DEMATIOIDES. Les agents responsables de moisissures consistent notamment là aussi dans des champignons imparfaits, en général cellulolytiques, qui se développent sur la surface du bois dans des conditions d'humidité pouvant être celles rencontrées dans les pays de climat tempéré en générant des organes de fructification, ayant des formes et couleurs diverses, quinuisent à l'aspect esthétique du bois ; comme exemples de pareils champignons, on citera : ASPERGILLUS SPP, TRICHODERMA SPP, PENICILLIUM SPP. CLADOSPORIUM SPP.

Une bonne protection fongicide et temporaire du bois frais demande la mise au point d'un produit de traitement :

– renfermant une ou plusieurs substance(s) fongicide(s) capable de lutter contre l'attaque des champignons responsables du bleuissement en profondeur et des moisissures en surface, et

– présentant un double comportement : un premier comportement selon lequel le produit de traitement doit être capable de faire pénétrer dans le bois la (ou les) substances(s) fongicide(s) prévue(s) pour lutter contre l'attaque des agents responsables du bleuissement ; et un second comportement simultané selon lequel le produit de traitement doit être capable de créer en même temps en surface une barrière anti-moisissure en permettant le maintien en surface du bois du (ou des) substance(s) fongicide(s) prévue(s) pour lutter contre l'attaque des agents responsables de moisissures.

On décrit dans le brevet belge BE-A-904.660 une émulsion aqueuse fongicide obtenue par dilution avec de l'eau d'un concentré à base de deux substances fongicides et d'un solvant approprié de ces fongicides. Les substances fongicides mises en oeuvre sont : d'une part, un dérivé d'imidazole ou de triazole-1,2,4 et d'autre part, un sel d'ammonium quaternaire dérivé d'un acide organique ou inorganique. Une émulsion de ce type préparée à partir d'un concentré renfermant par exemple comme substance fongicide le 1H-[(dichloro-2,4 phényl)-2 dioxolanne-1,3 yl-2 méthyl]-1 triazole-1,2,4 (dénommé azaconazole) et du chlorure de benzalkonium s'est révélé intéressante parce qu'elle est capable de faire pénétrer assez profondément dans le bois (probablement grâce à l'effet tensio-actif que peut développer aussi le sel d'ammonium quaternaire) les substances fongicides employées ; par contre, on a constaté que cette émulsion ne donne pas naissance à une barrière anti-moisissure efficace en surface du bois.

La présente invention se propose justement de fournir un produit de traitement de bois frais qui soit efficace à la fois pour lutter contre le bleuissement en profondeur et les moisissures en surface.

Un autre but de la présente invention est de fournir un produit de traitement du bois permettant la préparation de microémulsions aqueuses qui sont connues pour avoir d'excellentes propriétés d'application pour le traitement du bois.

Un autre but encore de la présente invention est de fournir un produit de traitement du bois qui soit capable au besoin de recevoir en complément, sans que cette mesure vienne nuire à l'obtention des buts définis ci-avant, une ou plusieurs substances insecticides et un agent tensio-actif approprié à cette matière active.

Il a maintenant été trouvé, et c'est ce qui constitue l'objet de la présente invention, que l'on pouvait atteindre les buts précités grâce aux concentrés liquides, émulsionnables dans l'eau, améliorés qui sont définis dans

ce qui suit.

Plus précisémet, la présente invention a pour objet dans concentrés liquides, émulsionnables dans l'eau, qui comprennent :

A) une quantité efficace d'une matière active constituée par :

(a1) au moins un composé fongicide ayant pour formule :

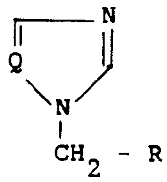

(I)

dans laquelle :

. Q est choisi dans le groupe constitué par N et CH ; et

. R est choisi dans le groupe constitué par les radicaux :

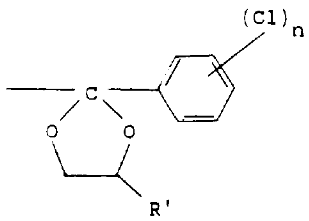

,

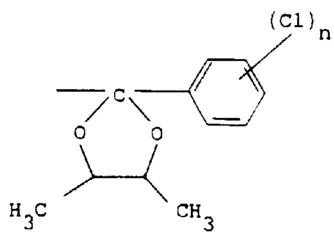

,

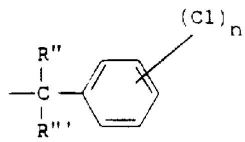

et

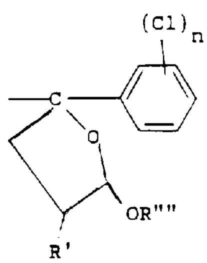

dans lesquels : R′ représente un atome d'hydrogène ou un radical alkyle, linéaire ou ramifié, ayant de 1 à 3 atomes de carbone ; R″ représente un atome d'hydrogène, un groupe hydroxyle ou cyano- ; R‴ représente un radical alkyle, linéaire ou ramifié, ayant de 1 à 6 atomes de carbone (éventuellement substitué par un groupe cycloalkyle ou un groupe phényle), un radical alcényloxy ayant de 3 à 4 atomes de carbone ou un radical phényle (éventuellement substitué par un ou plusieurs atome(s) d'halogène) ; R⁗ représente un atome d'hydrogène ou un radical alkyle, linéaire ou ramifié, ayant de 1 à 3 atomes de carbone (éventuellement substitué par un ou plusieurs atome(s) d'halogène) ; n est un nombre entier égal à 1 ou 2 ; et

(a2) au moins un composé fongicide ayant pour formule :

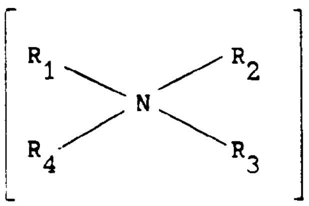 , X (II)

(partie cationique) , (partie anionque)

dans laquelle :

. la partie cationique du sel possède un nombre total d'atomes de carbone égal ou inférieur à 50 et $R_1$, $R_2$, $R_3$, $R_4$ représentent des radicaux organiques, identiques ou différents, dont la valence libre est portée par un atome de carbone, l'un des radicaux $R_1$, $R_2$, $R_3$ ou $R_4$ pouvant éventuellement représenter un atome d'hydrogène ou un autre groupe ammonium, deux de ces radicaux pouvant éventuellement former ensemble un radical unique divalent, trios de ces radicaux pouvant éventuellement former ensemble un radical unique trivalent, deux couples de ces radicaux pouvant éventuellement former ensemble deux radicaux uniques divalents : et

. la partie anionique X dérive d'un acide minéral ou organique ;

B) et un véhicule liquide de la matière active constituée par :

(b1) le milieu de dissolution de la matière active ;

(b2) éventuellement au moins une huile, et

(b3) éventuellement un agent de fixation ;

lesdits concentrés étant caractérisés par les points suivants :

. la matière active A) contient, en outre, (a3) au moins un composé fongicide choisi dans le groupe constitué par :

* un composé benzmidazole ayant pour formule :

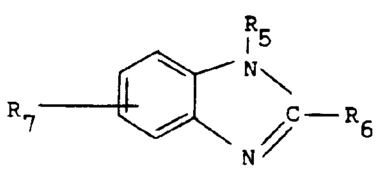 (III)

dans laquelle :

. $R_5$ représente un atome d'hydrogène ou un groupe $-CO-NR_5R_9$ avec $R_8$ représentant un atome d'hydrogène ou un radical alkyle linéaire ou ramifié, ayant de 1 à 4 atomes de carbone et avec $R_9$ représentant un radical alkyle, linéaire ou ramifié, ayant de 1 à 6 atomes de carbone, un radical phényle ou un radical benzyle, chacun de ces radicaux pouvant être substitué par un groupe alkyle inférieur ou un groupe alkoxy inférieur ;

. $R_5$ représente : un atome d'hydrogène ; un groupe amino $-NH_2$ ; un groupe $-NH-CO-OR_5$ ou un groupe $-NH-CO-NH-OR_5$ avec $R_5$ étant un radical alkyle ayant la définition donnée ci-avant ; ou un groupe thiazolyl-4 ; $R_5$ pouvant former avec $R_5$ et les atomes auxquels sont liés ces radicaux un cycle unique ;

$R_7$ représente un atome d'hydrogène ou un groupe hydroxyle ;

* le mélange d'un ou plusieurs des composés de formule (III) avec un ou plusieurs dérivés de substitution d'isothiazolinone ; et

. le milieu de dissolution (b1) de la matière active comprend au moins deux solvants obligatoires (b1.1) et (b1.2), (b1.1) consistant dans un éther d'alcanol inférieur ayant de 1 à 4 atomes de carbone et de diol aliphatique saturé ayant de 2 à 10 atomes de carbone, (b1.2) consistant dans un monoacide carboxylique aliphatique saturé ayant de 1 à 6 atomes de carbone.

D'une matière générale, les proportions des constituants d'un concentré liquide fongicide conforme à la présente invention sont choisies entre les limites suivantes (exprimant le pourcentage pondéral de chacun des

constituants dans le concentré) :

- de 3 % à 8 % de composé(s) fongicide(s) (a1),
- de 15 % à 40 % de composé(s) fongicide(s) (a2),
- de 0,1 % à 2 % de composé(s) fongicide(s) (a3),
- une quantité égale ou supérieure à 50 % de solvants (b1),
- de 0 % à 20 % d'huile(s) (b2) et/ou d'agent(s) de fixation (b3).

S'agissant du (ou des) composé(s) fongicide(s) (a1), à titre de composés qui conviennent bien, on citera ceux répondant à la formule (I) dans laquelle Q = N. Dans cette famille de composés qui conviennent bien, on fait appel notamment aux composés ayant les formules suivantes :

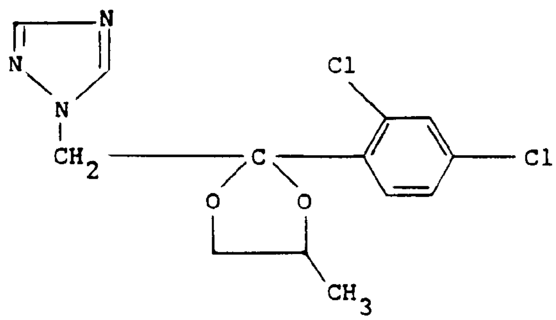

(IV)

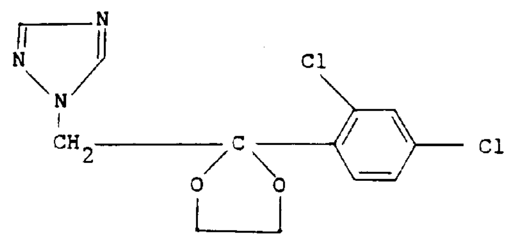

(V)

(ce composé est bien connu sous la dénomination : azaconazole)

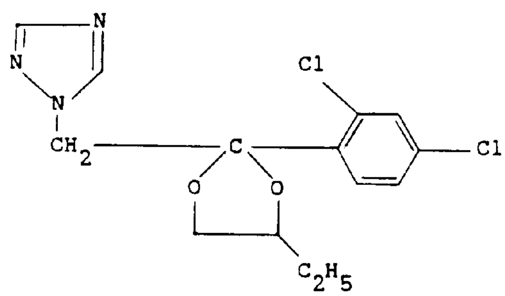

(VI)

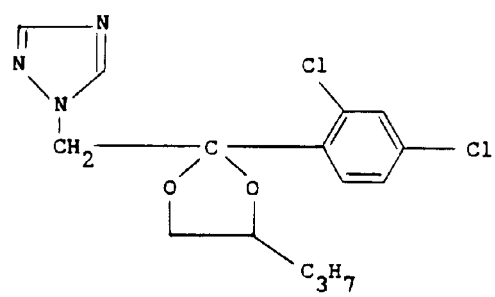

(VII)

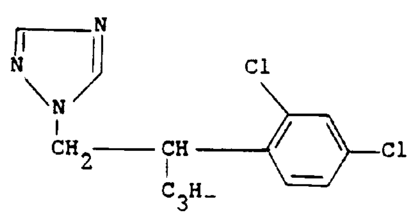

(VIII)

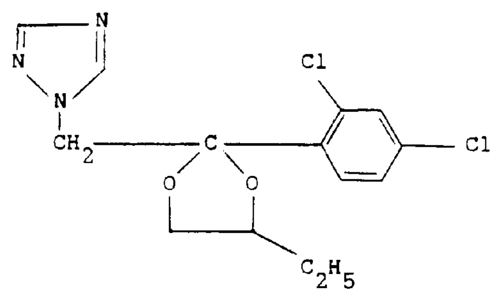

(IX)

et

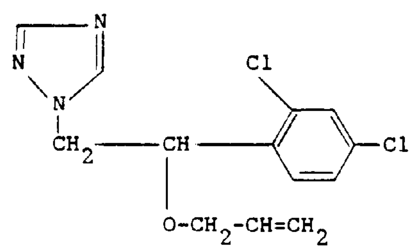

(X)

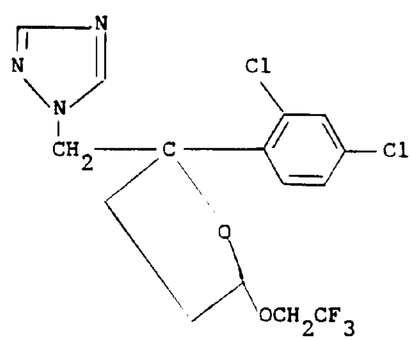

(XI)

Les composés de formules (I) et (IV) à (XI) peuvent être préparés selon les indications données par exemple dans les brevets US-A-3.575.999, US-A-3.717.655, US-A-3.636.002, US-A-3.927.017, US-A-4.156.008, US-A-4.079.062 et EP-A-0.230.844.

S'agissant du (ou des) composé(s) fongicide(s) (a2), on utilise un ou plusieurs sels de formule (II) dont la partie anionique dérive d'un acide minéral ou organique. Par acide minéral ou organique, on entend un mono- ou polyacide dont l'une au moins des fonctions acides possède une constante d'ionisation dans l'eau, pka, inférieure ou égale à 7. Comme acides de ce type on peut citer, parmi les acides minéraux, les acides chlorhydrique, sulfurique, orthophosphorique, pyrophosphorique ; parmi les acides organiques les acides organosulfoniques, en particulier paratoluène sulfonique, méthane sulfonique, benzène sulfonique, naphtalène sulfonique ; les acides organophosphoniques, en particulier les acides monoalcoyl- ou monoarylphosphoniques tels que méthylphosphonique ou benzène phosphonique ; les acides mono- ou polycarboxyliques, tels que les acides acétique ou propionique ou leurs dérivés dihalogéno- et trihalogéno- (notamment chloro et fluoro).

On utilise de préférence, comme sels de formule (II), les sels d'ammonium quaternaire. Plus spécifiquement, la partie cationique de ces sels présente les particularités suivantes :

. les divers rédicaux $R_1$, $R_2$, $R_3$ et $R_4$ peuvent représenter :

– des radicaux hydrocarbonés, saturés ou insaturés, aliphatiques (linéaires ou ramifiés), cycloaliphatiques, aromatiques (de type arylique ou arylaliphatique),

– des radicaux comportent plusieurs enchaînements oxyalkylène, par exemple des radicaux de formule :

$$-R_{10}-(O-R_{10})_t-OH$$

où t est compris entre 1 et 10 et $R_{10}$ représente un radical $-CH_2-$, $-CH_2-CH_2-$ ou $-CH_2-CH(CH_3)-$ ;

. un des radicaux $R_1$, $R_2$, $R_3$ ou $R_4$ peut représenter un radical ammonium quaternaire de formule :

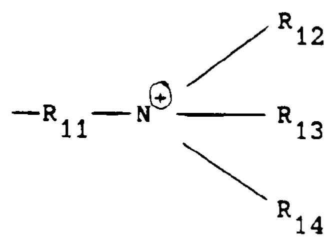

où $R_{12}$, $R_{13}$ et $R_{14}$ représentent des radicaux hydrocarbonés ou à groupements oxyalkylène tels que définis ci-avant pour $R_1$, $R_2$, $R_3$ et $R_4$ et $R_{11}$ est un radical hydrocarboné divalent, aliphatique ou aromatique (notamment de type arylaliphatique) dont la ou les chaînes carbonées peuvent être interrompues pae des atomes d'oxygène, les valences libres du radical $R_{11}$ étant portées par des atomes de carbone à caractère aliphatique ;

. un ou plusieurs couples de radicaux $R_1$, $R_2$, $R_3$ et $R_4$ peuvent former des radicaux uniques divalents alkylène ou oxyalkylène.

Comme sels d'ammonium de formule (II) plus particulièrement utilisables, on peut citer notamment : les sels de triméthylalkylammonium tels que par exemple le chlorure ou le propionate de triméthyldécylammonium, de triméthyldodécylammonium, de triméthylhexadecylammonium, de triméthyloctadécylammonium, de triméthylalkylammonium dans lequel la chaîne alkyle est un mélange de radicaux alkyles de $C_8H_{17}$ à $C_{18}H_{37}$ ; les sels de diméthyldialkylammonium tels que par exemple le chlorure ou le propionate de diméthyldidécylammonium, de diméthyldidodécylammonium, de diméthyldihexadécylammonium, de diméthyldioctadécylammonium, de diméthyldialkylammonium dans lequel les chaînes alkyles sont un mélange de radicaux alkyles de $C_8H_{17}$ à $C_{18}H_{37}$ ; les sels de diméthylalkylbenzylammonium tel que par exemple le chlorure ou le propionate de diméthyldécylbenzylammonium, de diméthyldodécylbenzylammonium, de diméthylhexadécylbenzylammonium, de diméthyloctadécylbenzylammonium, de diméthylalkylbenzylammonium dans lequel le chaîne alkyle est un mélange de radicaux alkyles de $C_8H_{17}$ à $C_{18}H_{37}$ (ce sel est bien connu sous la dénomination de chlorure ou de propionate de benzalkonium).

S'agissent du (ou des) composé(s) fongicide(s) (a3), à titre de composés benzimidazole qui conviennent bien, on citera notamment ceux répondant aux formules suivantes :

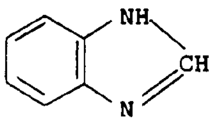

(XII)

benzimidazole

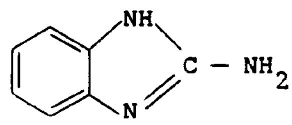

(XIII)

amino-2 benzimidazole

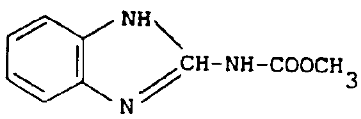

(XIV)

(méthoxycarbonylamino)-2 benzimidazole

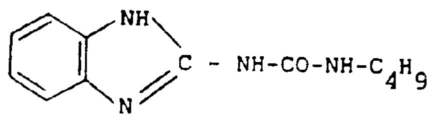

(XV)

(butyl-3 uréido)-2 benzimidazole

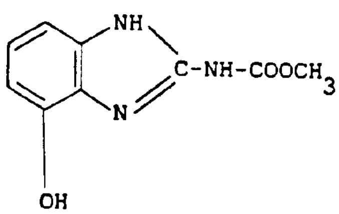

(XVI)

(méthoxycarbonylamino)-2 hydroxy-4 benzimidazole

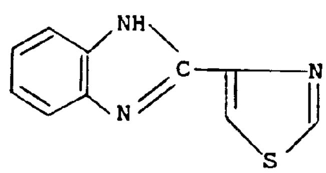

(XVII)

(thiazolyl-4)-2 benzimidazole

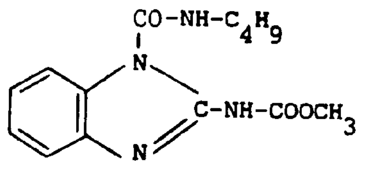

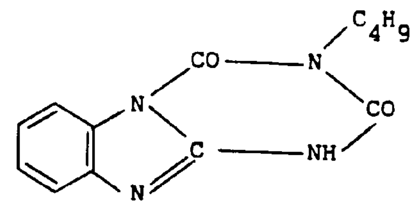

(XVIII)

(XIX)

(butylaminocarbonyl)-1
(méthoxycarbonylamino)-2 benzimidazole
(connu sous la dénomination : bénomyl).

S'agissant du dérivé d'isothiazolinone qui peut rentrer dans la constitution de ce type de fongicides (a3), on citera par exemple la chloro-5 méthyl-2 isothiazoline-4 one-3 et/ou la méthyl-2 isothiazoline-4 one-3. Les composés de formules (III) et (XII) à (XIX) sont des produits connus de l'art antérieur dont certains sont disponibles dans le commerce comme le bénomyl.

Une matière active fongicide particulièrement intéressante pour la mise en oeuvre de l'invention est constituée par l'association (a1) + (a2) + (a3) dans laquelle (a1) est de l'azaconazole, (a2) est un sel de diméthylalkylbenzylammonium et (a3) est le (méthoxycarbonylamino)-2 benzimidazole et/ou le bénomyl.

S'agissant du véhicule liquide B) mis en oeuvre dans la présente invention et, plus précisément, s'agissant du milieu de dissolution (b1) de la matière active, nous rappelons qu'il comprend au mins deux solvants obligatoires (b1.1) et (b1.2), (b1.1) consistant dans un éther d'alcanol et de diol, (b1.2) consistant dans un monoacide carboxylique. Un autre milieu de dissolution utilisable est celui renfermant un mélange de trois solvants : (b1.1) + (b1.2) + (b1.3), (b1.3) consistant dans un diol aliphatique saturé ayant de 2 à 10 atomes de carbone. Un autre milieu de dissolution encore utilisable est celui renfermant un mélange de trois solvants : (b1.1) + (b1.2) + de l'eau. Un autre milieu de dissolution encore utilisable est celui renfermant un mélange de quatre solvants : (b1.1) + (b1.2) + (b1.3) + de l'eau.

Parmi les solvants de type (b1.1) utilisables, on peut citer notamment : l'éther monométhylique du diéthylèneglycol, l'éther diméthylique du diéthylèneglycol, l'éther monoéthylique du diéthylèneglycol, l'éther diéthylique du diéthylèneglycol, l'éther monométhylique du propylèneglycol, l'éther monométhylique du dipropylèneglycol.

Parmi les solvants de type (b1.2) utilisables, on peut citer notamment : l'acide formique, l'acide acétique, l'acide propionique.

Parmi les solvant de type (b1.3) utilisables, on peut citer notamment : l'éthylèneglycol, le diéthylèneglycol, les propylèneglycols, les butylèneglycols, l'hyexylèneglycol.

Les proportions relatives de chaque solvant dans leurs mélanges ne sont pas critiques et peuvent varier dans de larges limites.

Les mélanges de solvants qui conviennent bien pour la mise en oeuvre de la présente invention sont constitués par les mélanges binaires (b1.1) + (b1.2) définis ci-avant renfermant 60 à 95 % en poids de solvant (b1.1) et 40 à 5 % en poids de solvant (b1.2). Quand on utilise des mélanges ternaires ou quaternaires de solvants, on veille de préférence à ce que :

- d'une part, le couple de solvants obligatoires (b1.1) + (b1.2) présente la composition indiquée ci-avant ;
- et d'autre part, la proportion pondérale dudit couple de solvants par rapport au poids total des mélanges considérés, c'est-à-dire : (b1.1) + (b1.2) + (b1.3), (b1.1) + (b1.2) + $H_2O$, (b1.1) + (b1.2) + (b1.3) + $H_2O$, représente généralement au moins 50 %.

Comme huile(s) (b2) que l'on peut utiliser pour confectionner le véhicule liquide B), on peut citer notamment : une huile végétale comme par exemple l'huile de lin, l'huile de soja, l'huile de pin, le tallöl, un mélange de terpinéols ; une huile minérale comme par exemple l'huile de spindle qui est une fraction de distillation du pétrole intermédiaire entre les lampants et les paraffines.

Comme on l'a dit, le véhicule liquide B) peut aussi comprendre un ou des agents adhésifs (b3) propres à fixer l'agent de traitement sur le bois. On citera par exemple : l'amidon ; la carboxyméthylcellulose ; la colophane ou des esters de colophane ; la gomme arabique ; l'alcool polyvinylique ; l'acide humique ; les résides glycérophtaliques, les résines dites d'hydrocarbures composées de bas polymères d'hydrocarbures insaturés aliphatiques et/ou aromatiques issus du craquage de fractions pétrolières riches en indène.

La matière active A) des concentrés selon la présente invention peut contenir, en plus, (a4) au moins un composé insecticide insoluble dans l'eau. Les insecticides utilisables sont des produits connus pour protéger le bois contre l'attaque des insectes xylophages tels que notamment les termites, les capricornes, les vrillettes, les lyctus. A titre de composés qui conviennent bien pour mettre en oeuvre la présente invention, on citera : des composés organo-halogénés, tels que par exemple le DDT (dichloro diphényl trichloro-éthane), le méthoxychlore (diméthoxy diphényl trichoroéthane), le lindane (isomère $\gamma$ de l'hexachlorocyclohexane), le chlordane (octachlorohexahydro méthano indène), l'aldrine (endo hexachloro hexahydrodiméthano naphtalène), le toxaphène ; des composés organo-phosphorés, tels que par exemple le diéthion (O,O,O',O'-tétraéthyl S,S'-méthylènedithiophosphate), le parathion (O,O-diéthylparanitrophénylthiophosphate), la phosalone (O,O-diéthyl dithiophosphorylméthyl-3-chloro-6 benzoxazolone) ; des carbamates insecticides, tels que par exemple le sevin (N-méthylcarbamate de naphtyle), le carbofuran (N-méthylcarbamate de diméthyldihydrobenzofurannyle) ; des pyréthrinoïdes de synthèse , tels que par exemple la décaméthrine ($\alpha$-cyano phénoxybenzyl dibromovinyl diméthylcyclopropane carboxylate), la cyperméthrine (phénoxybenzyl cis-trans diméthyl dichlorovinyl cyclopropane carboxylate), le fenvalérate ($\alpha$-cyano phénoxybenzyl chlorophényl méthylbutylbutyrate).

Dans le cas de l'emploi d'une matière active à base de composés fongicides et de composé(s) insecticide(s), le véhicule liquide B) des concentrés selon l'invention renfermera en plus, à côté des ingrédients obligatoires (b1) et facultatifs (b2) et (b3) définis ci-avant, un agent tensio-actif (b4) consistant dans un tensio-actif non ionique appartenant de préférence au groupe des alcools gras polyoxyalkylés, des acides-alcools gras polyoxyalkylés, des phénols polyoxyalkylés, des phénylphénols polyoxyalkylés et des alkylphénols polyoxyalkylés obtenus par condensation de 5 à 80 moles d'oxyde d'alkylène, en particulier l'oxyde d'éthylène, avec un alcool gras ou un acide-alcool gras saturé ou insaturé ayant de 8 à 22 atomes de carbone, du phénol, un phénylphénol ou un alkylphénol dans lequel le reste akyle possède au moins 4 atomes de carbone.

Ces agents tensio-actifs non ioniques sont connus et ont été largement décrits dans la technique. Pour le choix de l'agent tensio-actif (b4), on peut se reporter par exemple à l'Encylopedia of Chemical Technology, Kirk-Othmer, volume 22, pages 332-432, 3e édition de 1983. Comme exemples d'agents tensio-actifs non ioniques, on peut citer le produit disponible dans le commerce sous la marque déposée Soprophor B qui est obtenu par addition de l'oxyde d'éthylène sur l'huile de ricin.

Dans le cas de l'emploi d'une matière active à base de composés fongicides et de composé(s) insecticide(s), il peut être nécessaire dans certains cas que le milieu de dissolution (b1) renferme, en plus, à côté des mélanges de solvants (b1.1) + (b1.2), (b1.1) + (b1.2) + $H_2O$, (b1.1) + (b1.2) + (b1.3) ou (b1.1) + (b1.2) + (1.3) + $H_2O$, un solvant supplémentaire (b1.4) qui est parfaitement adapté au(x) composé(s) insecticide(s) mis en oeuvre. Comme solvants de type (b1.4) utilisables alors, on peut citer notamment : les hydrocarbures aromatiques, liquides tels que par exemple le chlorobenzène, le dichlorobenzène, le toluène, les xylènes ou des mélanges d'hydrocarbures aromatiques provenant directement de la distillation du pétrole comme les lampants qui sont des coupes de distillation comprises dans un intervalle de températures de 150° à 300°C ; des monoalcools, tels que par exemple le cyclohexanol ; des cétones aliphatiques, tels que par exemple l'éthylamylcétone, la diisobutylcétone ; des esters, tels que par exemple les phtalates de butyle ou de nonyle, les succinates, adipates, oxalates, malonates de diméthyle ou de diéthyle ; des amides, tels que par exemple le diméthylformamide ou le diméthylacétamide. A noter encore qu'il est possible et parfois même avantageux d'engager le (ou les) composé(s) insecticide(s) sous forme de solution dans un solvant de type (b1.1), (b1.3) ou (b1.4) suivant la nature du (ou de ces) composé(s) insecticide(s) mis en oeuvre. Lorsque l'on fait appel au solvant supplémentaire (b1.4), on veille de préférence, comme indiqué ci-avant, à ce que :

– d'une part le couple de solvants obligatoires (b1.1) + (b1.2) présente la composition définie ci-avant selon laquelle le couple renferme 60 à 95 % en poids de solvant (b1.1) et 40 à 5 % en poids de solvant (b1.2),
– et d'autre part la proportion du couple de solvants (b1.1) + (b1.2) représente au moins 50 % du poids total des mélanges possibles c'est-à-dire : (b1.1) + (b1.2) + (b1.4), (b1.1) + (b1.2) + (b1.3) + (b1.4), (b1.1) + (b1.2) + $H_2O$ + (b1.4), (b1.1) + (b1.2) + (b1.3) + (b1.3) + $H_2O$ + (b1.4).

D'une manière générale, les proportions des constituants d'un concentré liquide fongicide et insecticide conforme à la présente invention sont choisies entre les limites suivantes (exprimant le pourcentage pondéral de chacun des constituants dans le concentré) :

– de 3 % à 8 % de composé(s) fongicide(s) (a1),
– de 15 % à 40 % de composé(s) fongicide(s) (a2),
– de 0,1 % à 2 % de compose(s) fongicide(s) (a3),
– de 1 % à 10 % de composé(s) insecticide(s) (a4),
– une quantité égale ou supérieure à 20 % de solvants (b1),

– de 0 % à 20 % d'huile(s) (b2) et/ou d'agent(s) de fixation (b3), et
– de 5 % à 20 % d'agent tensio-actif (b4).

Des composés insecticides (a4) qui sont intéressants sont constitués par : du lindane, de la phosalone, du sevin, de la cyperméthrine, du fenvalérate ou leurs mélanges.

Les concentrés liquides fongicides selon la présente invention peuvent être préparés, et il s'agit là d'une modalité préférentielle, de la manière suivante :

(1) on dissout dans le véhicule liquide B), constitué par le milieu de dissolution (b1) + éventuellement une (ou plusieurs) huile(s) (b2) + ébentuellement un (ou plusieurs) agent(s) de fixation (b3), le (ou les) composé(s) fongicide(s) (a2) en chauffant l'ensemble à une température comprise entre 30°C et 60°C, puis
(2) on ajoute le (ou les) composé(s) fongicide(s) (a1) et on agite mécaniquement l'ensemble maintenu à la température précitée jusqu'à dissolution complète du (ou de) composé(s) (a1), et enfin
(3) on ajoute le (ou les) composé(s) fongicide(s) (a3) en maintenant toujours la température à la valeur précitée.

Les concentrés liquides fongicides et insecticides selon la présente invention peuvent être préparés, et il s'agit là aussi d'une modalité préférentielle, de la manière suivant :

(1') on enchaîne les étapes (1), (2) et (3) définies ci-avant, puis
(2') on laisse refroidir l'ensemble jusqu'à 20°C, et
(3') on ajoute successivement et sous agitation mécanique, d'une part l'agent tensio-actif (b4) et d'autre part le (ou les) composé(s) insecticide(s) (a4) qui se trouve(nt), de manière très préférentielle, sous forme de solution dans un solvant de type (b1.1), b1.3) ou (b1.4).

On peut très bien ajouter dans les concentrés liquides conformes à la présente invention des pigments et/ou des colorants en vue de teinter le bois à traiter.

Les concentrés obtenues se présentent sous forme d'un liquide transparent et parfaitement stable au stockage entre -10°C et +30°C.

Les microémulsions obtenues à partir des concentrés selon l'invention et destinées à la protection du bois frais contre le bleuissement en particulier en profondeur et le développement des moisissures en surface et éventuellement contre les insectes, sont préparées par simple addition, sous agitation, du concentré contenant les biocides choisis dans la masse d'eau désirée. Elles sont caractérisées par un aspect translucide à transparent.

Ce type d'émulsion est communément appelé microémulsion ou plus rarement solution micellaire, par opposition à macroémulsion qui présente un aspect laiteux. Les mciroémulsions selon l'invention sont aussi caractérisées par une bonne stabilité dans le temps ; elles présentent aussi une viscosité et une tension superficielle très faibles. Ces caractéristiques : microémulsion, bonne stabilité, faible viscosité, tension superficielle peu élevée, confèrent aux émulsions selon l'invention d'excellentes propriétés d'application pour le traitement du bois.

Les microémulsions contiennent le concentré selon l'invention et de l'eau dans un rapport pondéral respectif pouvant varier de 2/98 à 10/90, de préférence de 2/98 à 5/95. De pareilles microémulsions sont obtenues par addition de 1 partie en poids du concentré dans 9 à 49 parties en poids d'eau et de préférence dans 19 à 49 parties en poids d'eau.

Les microémulsions aqueuses selon l'invention peuvent être appliquées sur le bois frais pour le protéger suivant les procédés connus en soi, de préférence les procédés par enduction, par projection, par pulvérisation ou en utilisant des procédés d'imprégnation, par exemple, par trempage, par mise sous pression et/ou par mise sous vide.

L'invention sera mieux comprise à lecture de l'exemple qui va suivre.

## EXEMPLE

Dans cet exemple, on décrit un concentré fongicide émulsionnable conforme à l'invention et un essai sur bois effectué à l'aide d'une microémulsion aqueuse préparée à partir de ce concentré. On montrera que la protection du bois contre le bleuissement en profondeur et le développement des moisissures en surface est incontestablement mieux assurée avec le produit de traitement selon l'invention qu'avec les produits de traitement conformes à l'art antérieur.

### 1) Concentré émulsionnable :

Il présente la composition pondérale suivante :

. 5,3 % d'azaconazole composé fongicide de type (a1) répondant à la formule (V) ,
. 37,3 % de chlorure de benzalkonium composé fongicide de type (a2) ,

. 0,26 % de bénomyl composé fongicide de type (a3) répondant à la formule (XVIII)
. 53,3 % d'éther monométhylique de propylèneglycol solvant de type (b1.1) et
. 3,84 % d'acide acétique solvant de type (b1.2) .

Pour préparer ce concentré, on charge dans un dissoluteur équipé d'un système d'agitation, d'un système de chauffage et des annexes classiques relatives à ce type d'appareillage, les solvants (b1.1) et (b1.2) précités et le chlorure de benzalkonium et on chauffe l'ensemble à 40°C. On ajoute ensuite l'azaconazole et on agite ce mélange tout en le maintenant à 40°C de manière à assurer la dissolution complète des biocides solides engagés (cette étape demande environ 20 minutes). Enfin on ajoute le bénomyl en maintenant la température à 40°C : sa dissolution est rapide et se fait en environ 5 minutes.

Le concentré émulsionnable obtenu présente à 20°C une densité de 0,9384. Il est très stable : à -5°C, il ne cristallise pas et à +40°C, après plusieurs jours à cette température, on ne note aucun dépôt sur le fond du récipient qui le contient.

2) Microémulsion :

Elle est préparée en mélangeant, sous agitation, 1 partie en poids de concentré avec 29 parties en poids d'eau (dilution de 3,33 % en poids). On obtient aisément une microémulsion de type huile dans eau à phase continue aqueuse présentant un aspect transparent.

La stabilité de cette microémulsion est très bonne. Un test de stabilité a été conformément à la norme NF X 41-580. Ce test consiste notamment à mesurer dans des conditions déterminées l'importance de la séparation de phase en déterminant la quantité de crème ou dépôt qui se forme après repos de l'émulsion. On note l'absence de séparation de phase après un repos de 1 heure 30 minutes à +20°C ; après un repos de 24 heures, on note encore l'absence de séparation de phase. Par ailleurs, après avoir réalisé 5 cycles de gel/dégel (de -10°C à +20°C), on note que la microémulsion à des caractéristiques identiques à celles de départ.

3) Test d'efficacité sur papier-filtre :

Des mesures seuil fongistatique ont été effectuées pour déterminer l'activité de la microémulsion vis à vis de champignons responsables du bleuissement du bois en comparaison avec un fongicide classique consistant dans une solution aqueuse de pentachlorophénate de sodium (PCP-Na).

Nous allons décrire ci-après la méthode de mise en oeuvre de ce test :

Le principe consiste à exposer des disques de filtre cellulose (diamètre 37mm, épaisseur 1mm) traités à l'aide du produit biocide essayé, à l'infestation par des champignons de bleuissement du bois employés en cultures mixtes.

3.1) - Préparation des disques :

Les disques sont préalablement trempés dans une solution aqueuse d'extrait de malt (2 %). Après séchage et numérotage, ils sont répartis, à raison de 3 par champignon et par concentration étudiées, en un certain nombre de séries.

Ils font ensuite l'objet du traitement qui consiste en une immersion de 30 secondes dans les émulsions et solutions en essai, puis sont mis à sécher pendant une semaine à température ambiante (de l'ordre de 20°C), à l'issue de laquelle ils sont stérilisés par irradiation gamma.

3.2) - Dispositif expérimental :

Chaque disque est installé, comme indiqué plus loin, dans une boîte de Pétri stérile (diamètre 90mm) préparée de la manière suivante : au centre de la boîte est placé un anneau de verre, de 5mm de hauteur et de diamètre inférieur à celui des disques, et préalablement stérilisé, puis un milieu malt-agar (2 %) est distribué dans la boîte, dans des conditions aseptiques, de manière à recouvrir tout le fond de la boîte autour de l'anneau de verre, et ce sur une hauteur ne dépassant pas 3mm.

Après refroidissement et solidification du milieu de culture, l'anneau de verre reçoit un disque, déposé aseptiquement.

3.3) - Inoculation :

Les champignons d'essai utilisés sont les espèces suivantes :

– AUREOBASIDIUM PULLULANS,

– HORMONEMA DEMATIOIDES,
– SCLEROPHOMA PITYOPHILA

L'inoculation des boîtes de Pétri se fait par aspersion uniforme à la fois du milieu de culture et du disque, à l'aide de suspension de spores.

Après inoculation, les boîtes de Pétri sont placées dans une enceinte à 22°C (+/- 2°C) et font l'object d'une surveillance continuelle pendant la durée de l'essai, fixée à 2 semaines.

3.4) - Examen en fin d'essai :

Il est à noter que le dispositif employé, en évitant le contact entre le milieu de culture et le disque traité, supprime toute possibilité d'interaction entre ces deux éléments, susceptible de fausser l'expérience notamment par diffusion éventuelle du produit essayé dans le milieu de culture.

L'examen en fin d'essai porte :

– sur le développement des champignons sur le milieu de culture, témoignant de la validité de l'essai s'il s'est fait normalement, c'est-à-dire si la totalité de la surface de ce milieu est envahie en fin d'essai.
– sur le degré de développement des champignons sur chaque disque traité.

3.5) - Résultats :

Pour la microémulsion selon l'invention, on a trouvé que l'efficacité (ou seuil de non développement) est comprise entre 0,05 % et 0,1 %. Cette efficacité est exprimée en terme de concentration de matière active fongicide dans la microémulsion prête à l'emploi.

Pour la solution aqueuse de PCP-Na, on a trouvé que l'efficacité est comprise entre 0,01 % et 0,1 %.

Le produit biocide selon la présente invention est donc tout aussi efficace que le PCP-Na couramment utilisé pour la protection du bois.

4) Test d'efficacité sur bois :

Il s'agit d'un test d'efficacité de l'émulsion à propos de la protection du bois frais contre le bleuissement en profondeur et le développement de moisissures en surface.

On traite une série d'éprouvettes en bois de pin sylvestre, fraîchement sciées, de dimensions 1m (longueur) x 15cm (largeur) x 27mm (épaisseur), par trempage pendant 30 secondes dans différents produits fongicides de traitement.

Les éprouvettes de bois frais sont ensuite inoculées en les soumettant, par pulvérisation, à l'action d'une part d'une culture mixte de deux champignons responsables du bleuissement : AUREOBASIDIUM PULLULANS et HORMONEMA DEMATIOIDES, et d'autre part d'une culture mixte de plusieurs champignons responsables de moisissures : ASPERGILLUS NIGER, ASPERGILLUS FLAVUS, TRICHODERMA VIRIDE, PENICILLIUM SPP et CLADOSPORIUM SPP. Ces champignons sont utilisés sous forme d'une suspension de spores et c'est cette suspension qui est pulvérisée sur le bois.

Les éprouvettes ainsi traitées sont ensuite placées à l'extérieur sur le sol terrestre lui-même en plusieurs paquets de 9 éprouvettes, les éprouvettes d'un même paquet étant empilées les unes sur les autres par ensemble de trois éprouvettes et lesdits ensembles étant séparés les uns des autres par des baguettes de bois non traitées par un produit fongicide. Chaque paquet est installé à l'intérieur d'un tunnel en matière plastique transparente tenant lieu d'une serre, de façon à favoriser les condensations qui sont propices au développement des moisissures et à créer des conditions optimales pour le développement des agents de bleuissement en profondeur.

La période d'incubation varie bien entendu en fonction des conditions météorologiques du moment, mais l'exploitation des résultats est possible à partir du moment où toutes les planches témoins non traitées par le produit fongicide sont totalement altérées en surface par les moisissures. Cette période demande en moyenne 7 semaines.

Au bout de 7 semaines donc, on examine qualitativement (c'est-à-dire, d'une part à l'oeil nu et d'autre part au microscope) la surface de chaque éprouvette pour y déceler la présence d'éléments fongiques. L'intensité des altérations visibles à la surface (moisissures) est exprimée en utilisant le système de cotation suivant :

0 = pas de moisissures,
1 = 10 % de la surface totale de l'éprouvette est altérée par des moisissures,
2 = 20 % de la surface totale de l'éprouvette est altérée,
3 = 40 % de la surface totale de l'éprouvette est altérée,
4 = 60 % de la surface totale de l'éprouvette est altérée,

5 = 80 % de la surface totale de l'éprouvette est altérée,
6 = 100 % de la surface totale de l'éprouvette est altérée.

Au bout de 10 à 12 semaines, les éprouvettes sont récupérées pour un examen destructif. Chaque éprouvette est découpée dans le sens transversal et sur chaque section on détermine à l'aide d'une loupe et d'un microscope la profondeur de bis à partir de la surface qui a bleui. On indique la profondeur moyenne en mm de bois qui a bleui sur l'ensemble des éprouvettes.

Les différents produits fongicides de traitement qui ont été testés de la manière indiquée ci-avant sont les suivants :

– la microémulsion préparée au paragraphe 2) ci-avant ;
– une solution aqueuse contenant 1 % en poids de PCP-Na (essai A) ;
– une émulsion selon l'art antérieur (BE-A-904.660) préparée à partir de (essai B) :
  * 1 partie en poids d'un concentré ayant la composition pondérale suivante (densité à 20° = 0,9564) :
    . 5,2 % d'azaconazole,
    . 47,4 % de chlorure de benzalkonium, et
    . 47,4 % d'éther monométhylique de propylèneglycol ;
  * et 29 parties en poids d'eau ;
– une émulsion qui n'est pas conforme à la présente invention préparée à partir de (essai C) :
* 1 partie en poids d'un concentré ayant la composition pondérale suivante (densité à 20°C = 0,985) :
  . 5,1 % d'azaconazole,
  . 35,5 % de chlorure de benzalkonium,
  . 1,6 % d'une substance fongicide à large spectre anti-moisissure disponible dans le commerce sous la marque déposée KATHON 886 MW qui comprend 13,9 % en poids d'un mélange de 2 composés fongicides : chloro-5 méthyl-2 isothiazoline-4 one-3 et méthyl-2 isothiazoline-4 one-3,
  . 35,5 d'éthermonométhylique de propylèneglycol, et
  . 22,3 % d'eau ;
* et 29 parties en poids d'eau.

Les résultats obtenus sont rassemblés dans le tableau suivant :

| Produit de traitement | Moisissures de surface | Zone interne qui a bleui |
|---|---|---|
| celui de l'exemple selon l'invention | 0 | 0 mm |
| celui de l'essai A | 1 | 2 mm |
| celui de l'essai B | 3 | 2 mm |
| celui de l'essai C | 2 | 0 mm |

## Revendications

### Revendications pour les Etats contractants suivants : AT, BE, CH, DE, FR, GB, GR, IT, LI, LU, NL, SE

1. concentrés liquides, émulsionnables dans l'eau, qui comprennent :
A) une quantité efficace d'une matière active constituée par :
  (a1) au moins un composé fongicide ayant pour formule :

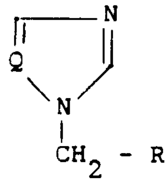

(I)

dans laquelle :

. Q est choisi dans le groupe constitué par N et CH ; et

. R est choisi dans le groupe constitué par les radicaux :

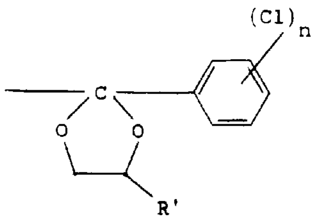 , 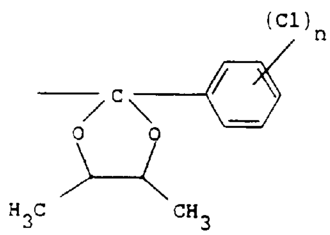 , 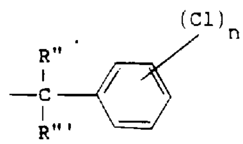

et 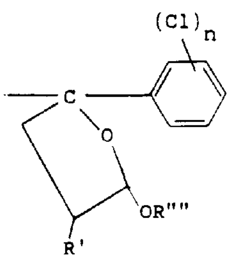

dans lesquels : R′ représente un atome d'hydrogène ou un radical alkyle, linéaire ou ramifié, ayant de 1 à 3 atomes de carbone ; R″ représente un atome d'hydrogène, un groupe hydroxyle ou cyano- ; R‴ représente un radical alkyle, linéaire ou ramifié, ayant de 1 à 6 atomes de carbone (éventuellement substitué par un groupe cycloalyle ou un groupe phényle), un radical alcényloxy ayant de 3 à 4 atomes de carbone ou un radical phényle (éventuellement substitué par un ou plusieurs atome(s) d'halogène) ; R⁗ représente un atome d'hydrogène ou un radical alkyle, linéaire ou ramifié, ayant de 1 à 3 atomes de carbone (éventuellement substitué par un ou plusieurs atom(s) d'halogène) ; n est un nombre entier égal à 1 ou 2 ; et

(a2) au moins un composé fongicide ayant pour formule :

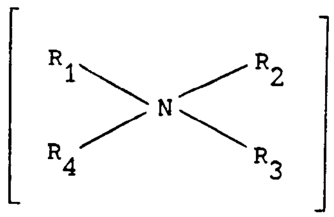 , X (II)

(partie cationique) , (partie anionque)

dans laquelle :

. la partie cationique du sel possède un nombre total d'atomes de carbone égal ou inférieur à 50 et $R_1$, $R_2$, $R_3$, $R_4$ représentant des radicaux organiques, identiques ou différents, dont la valence libre est portée par un atome de carbone, l'un des radicaux $R_1$, $R_2$, $R_3$ ou $R_4$ pouvant éventuellement représenter un atome d'hydrogène ou un autre groupe ammonium, deux de ces radicaux pouvant éventuellement former ensemble un radical divalent, trois de ces radicaux pouvant éventuellement former ensemble un radical unique trivalent, deux couples de ces radicaux pouvant éventuellement former ensemble deux radicaux uniques divalents ; et

. la partie anionique X dérive d'un acide minéral ou organique ;

B) et un véhicule liquide de la matière active constituée par :

(b1) le milieu de dissolution de la matière active ;

(b2) éventuellement au moins une huile, et

(b3) éventuellement au moins un agent de fixation ; lesdits concentrés étant caractérisés par les ponts suivants :

. la matière active A) contient, en outre, (a3) au moins un composé fongicide choisi dans le groupe constitué par :

* un composé benzimidazole ayant pour formule :

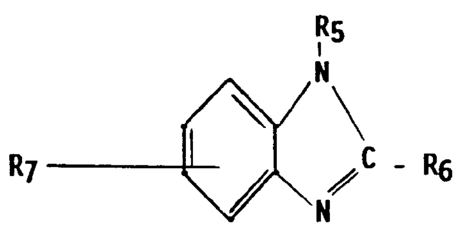 (III)

dans laquelle :

– $R_5$ représente un atome d'hydrogène ou un groupe $-CO-NR_8R_9$ avec $R_8$ représentant un atome d'hydrogène ou un radical alkyle linéaire ou ramifié, ayant de 1 à 4 atomes de carbone et avec $R_9$ représentant un radical alkyle, linéaire ou ramifié, ayant de 1 à 6 atomes de carbone, un radical phényle ou un radical benzyle, chacun de ces radicaux pouvant être substitué par un groupe alkyle inférieur ou un groupe alkoxy inférieur ;

– $R_6$ représente : un atome d'hydrogène ; un groupe amino $-NH_2$ ; un groupe $-NH-CO-OR_8$ ou un groupe $-NH-CO-NH-OR_8$ avec $R_8$ étant un radical alkyle ayant la définition donnée ci-avant ; ou un groupe thiazolyl-4 ; $R_8$ pouvant former avec $R_5$ et les atomes auxquels sont liés ces radicaux un cycle unique ;

– $R_7$ représente un atome d'hydrogène ou un groupe hydroxyle ;

* le mélange d'un ou plusieurs des composés de formule (III) avec un ou plusieurs dérivés de substitution d'isothiazolinone ;

. le milieu de dissolution (b1) de la matière active comprend au moins deux solvants obligatoires (b1.1) et b1.2), (b1.1) consistant dans un éther d'alcanol inférieur ayant de 1 à 4 atomes de carbone et de diol aliphatique saturé ayant de 2 à 10 atomes de carbone, (b1.2) consistant dans un monoacide carboxylique aliphatique saturé ayant de 1 à 6 atomes de carbone ; et

. les proportions des constituants des concentrés sont choisies entre les limites suivantes (exprimant le pourcentage pondéral de chacun des constituants dans les concentrés) :

– de 3 % à 8 % de composé(s) fongicide(s) (a1),

– de 15 % à 40 % de composé(s) fongicide(s) (a2),

– de 0,1 % à 2 % de composé(s) fongicide(s) (a3),

– une quantité égale ou supérieure à 50 % de solvants (b1) avec la double condition selon laquelle d'une part la composition du couple de solvants obligatoires (b1.1) + (b1.2) est telle qu'il renferme 60 à 95 % en poids de solvant (b1.1) et 40 à 5 % en poids de solvant (b1.2) et d'autre part, quand on utilise des mélanges ayant plus de deux solvants, la proportion du couple de solvants (b1.1) + (b1.2) représente au moins 50 % du poids total des mélanges possibles,

– de 0 % à 20 % d'huile(s) (b2) et/ou d'agent(s) de fixation (b3).

2. Concentrés selon la revendication 1, caractérisés en ce que la substance fongicide (a1) est prise dans le groupe des composés de formule (I) dans laquelle Q = N.

3. Concentrés selon l'une quelconque des revendications 1 et 2, caractérisés en ce que la substance fongicide (a2) est prise dans le groupe des sels d'ammonium quaternaire de formule (II) dans laquelle :

. les divers radicaux $R_1$, $R_2$, $R_3$ et $R_4$ peuvent représenter :

– des radicaux hydrocarbonés, saturés ou insaturés, aliphatiques (linéaires ou ramifiés), cycloaliphatiques, aromatiques (de type arylique ou arylaliphatique) ;

– des radicaux comportant plusieurs enchaînements oxyalkylène de formule :

$$-R_{10}—(O - R_{10}-)_t—OH$$

où t est compris entre 1 et 10 et $R_{10}$ représente un radical $-CH_2-$, $-CH_2-CH_2-$ ou $-CH_2-CH(CH_3)-$ ;

. un des radicaux $R_1$, $R_2$, $R_3$ ou $R_4$ peut représenter un radical ammonium quaternaire de formule :

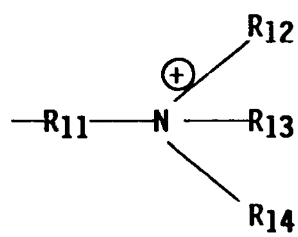

où $R_{12}$, $R_{13}$ et $R_{14}$ représentent des radicaux hydrocarbonés ou à groupements oxyalkylène tels que définis ci-avant pour $R_1$, $R_2$, $R_3$ et $R_4$ et $R_{11}$ est un radical hydrocarboné divalent, aliphatique ou aromatique dont la ou les chaînes carbonées peuvent être interrompues par des atomes d'oxygène, les valences libres du radical $R_{11}$ étant portées par des atomes de carbone à caractère aliphatique ;

. un ou plusieurs couples de radicaux $R_1$, $R_2$, $R_3$ et $R_4$ peuvent former des radicaux uniques divalents alkylène ou oxyalkylène ;

. la partie anionique X dérive d'un mono- ou polyacide d'origine minérale ou organique dont l'une au moins des fonctions acides possède une constante d'ionisation dans l'eau, pka, inférieure ou égale à 7.

4. Concentrés selon l'une quelconque des revendications 1 à 3, caractérisés en ce que le milieu de dissolution (b1) de la matière active est :

– un mélange ternaire du type : (b1.1) + (b1.2) + (b1.3) où (b1.3) consiste dans un diol aliphatique saturé ayant de 2 à 10 atomes de carbone ; ou du type : (b1.1) + (b1.2) + $H_2O$ ;

– ou un mélange quaternaire du type : (b1.1) + (b1.2) + (b1.3) + $H_2O$

5. Concentrés selon l'une quelconque des revendications 1 à 4, caractérisés en ce que d'une part la matière active A) contient, en outre, (a4) au moins un composé insecticide insoluble dans l'eau, d'autre part le véhicule liquide B) renferme, en plus, un agent tensio-actif (b4) de nature non ionique, et enfin les proportions des constituants des concentrés sont choisies entre les limites suivantes (exprimant le pourcentage pondéral de chacun des constituants dans les concentrés) :

– de 3 % à 8 % de composé(s) fongicide(s) (al),

– de 15 % à 40 % de composé(s) fongicide(s) (a2),

– de 0,1 % 0 2 % de composé(s) fongicide(s) (a3),

– de 1 % à 10 % de composé(s) insecticide(s) (a4),

– une quantité égale ou supérieure à 20 % de solvants (b1) avec la double condition selon laquelle d'une part la composition des couples de solvants obligatoires (b1.1) + (b1.2) est telle qu'il renferme 60 à 95 % en poids de solvant (b1.1) et 40 à 5 X en poids de solvant (b1.2) et d'autre part, quand on utilise des mélanges ayant plus de deux solvants, la proportion du couple de solvants (b1.1) + (b1.2) représente au moins 50 X du poids total des mélanges possibles,

– de 0 % à 20 % d'huile(s) (b2) et/ou d'agent(s) de fixation (b3), et
– de 5 % à 20 % d'agent tensio-actif (b4).

6. Microémulstions aqueuses caractérisées en ce qu'elles sont obtenues par simple addition, sous agitation, de 1 partie en poids d'un concentré selon l'une quelconque des revendications 1 à 5 précédentes avec 9 à 49 parties en poids d'eau.

7. Emploi des microémulstions selon la revendication 6 pour assurer la protection du bois fraîchement abattu et scié contre le bleuissement en profondeur et les moisissures en surface et éventuellement contre les insectes.

**Revendications pour l'Etat contractant suivant : ES**

1. Procédé de préparation de microémulsions aqueuses biocides, destinées à la protection des bois fraîchement abattus et sciés contre le bleuissement en profondeur et le développement des moisissures en surface et éventuellement contre les insectes, qui consiste dans les étapes suivantes :
(i) on prépare un concentré liquide, émulsionnable dans l'eau, comprenant :
A) une quantité efficace d'une matière active constituée par :
a1) au moins un composé fongicide ayant pour formule :

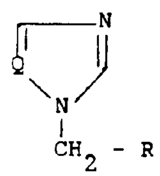

(I)

dans laquelle :
. Q est choisi dans le groupe consitué par N et CH ; et
. R est choisi dans le groupe consitué par les radicaux :

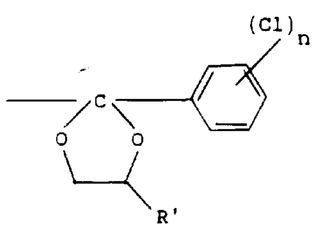
,
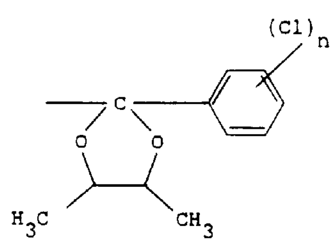
,
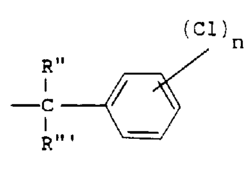

et 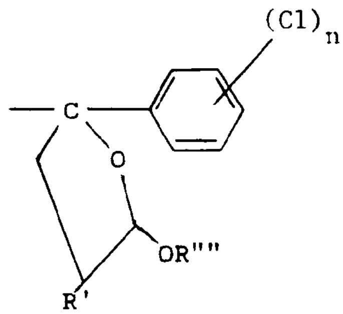

dans lesquels : R′ représente un atome d'hydrogène ou un radical alkyle, linéaire ou ramifié, ayant de 1 à 3 atomes de carbone ; R″ représente un atome d'hydrogène, un groupe hydroxyle ou cyano- ; R‴ représente un radical alkyle, linéaire ou ramifié, ayant de 1 à 6 atomes de carbone (éventuellement substitué par un groupe cycloalkyle ou un groupe phényle), un radical alcényloxy ayant de 3 à 4 atomes de carbone ou un radical phényle (éventuellement substitué par un ou plusieurs atome(s) d'halogène) ; R″″ représente un atome d'hydrogène ou un radical alkyle, linéaire ou ramifié, ayant de 1 à 3 atomes de carbone (éventuellement substitué par un ou plusieurs atome(s) d'halogène) ; n est un nombre entier égal à 1 ou 2 ; et

(a2) au moins un composé fongicide ayant pour formule :

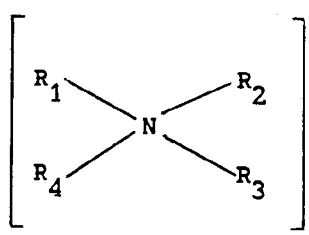 , X (II)

(partie cationique) , (partie anionque)

dans laquelle :

. la partie cationique du sel possède un nombre total d'atomes de carboneégal ou inférieur à 50 et $R_1$, $R_2$, $R_3$, $R_4$ représentent des radicaux organiques, identiques ou différents, dont la valence libre est portée par un atome de carbone, l'un des radicaux $R_1$, $R_2$, $R_3$ ou $R_4$ pouvant éventuellement représenter un atome d'hydrogène ou un autre groupe ammonium, deux de ces radicaux pouvant éventuellement former ensemble un radical unique divalent, trois de ces radicaux pouvant éventuellement former ensemble un radical unique trivalent, deux couples de ces radicaux pouvant éventuellement former ensemble deux radicaux uniques divalents ; et

. la partie anionique X dérive d'un acide minéral ou organique ;

B) et un véhicule liquide de la matière active constitué par :

(b1) le milieu de dissolution de la matière active ;

(b2) éventuellement au moins une huile, et

(b3) éventuellement au moins un agent de fixation ;

(2i) puis on soumet à une agitation le mélange obtenu par addition de 1 partie en poids du concentré liquide issu de l'étape (i) dans 9 à 49 parties en poids d'eau, ledit procédé étant caractérisé en ce que, dans l'étape (i) :

. la matière active A) contient, en outre, (a3) au moins un composé fongicide choisi dans le groupe constitué par :

* un composé benzimidazole ayant pour formule :

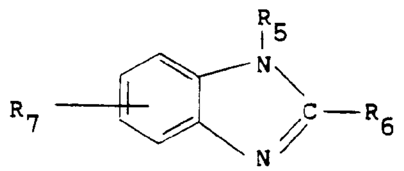

(III)

dans laquelle :

$R_5$ représente un atome d'hydrogène ou un groupe -CO-$NR_8R_9$ avec $R_8$ représentant un atome d'hydrogène ou un radical alkyle linéaire ou ramifié, ayant de 1 à 4 atomes de carbone et avec $R_9$ représentent un radical alkyle, linéaire ou ramifié, ayant de 1 à 6 atomes de carbone, un radical phényle ou un radical benzyle, chacun de ces radicaux pouvant être substitué par un groupe alkyle inférieur ou un groupe alkoxy inférieur ;

$R_5$ représente : un atome d'hydrogène ; un groupe amino $NH_2$ ; un groupe -NH-CO-$OR_8$ ou un groupe -NH-CO-NH-$OR_8$ avec $R_5$ étant un radical alkyle ayant la définition donnée ci-avant ; ou un groupe thiazolyl-4 ; $R_5$ pouvant former avec $R_5$ et les atomes auxquels sont liés ces radicaux un cycle unique ;

$R_7$ représente un atome d'hydrogène ou un groupe hydroxyle ;

* le mélange d'un ou plusieurs des composés de formule (III) avec un ou plusieurs dérivés de substitution d'isothiazolinone ; et

. le milieu de dissolution (b1) de la matière active comprend au moins deux solvants obligatoires (b1.1) et (b1.1) consistant dans un éther d'alcanol inférieur ayant de 1 à 4 atomes de carbone et de diol aliphatique saturé ayant de 2 à 10 atomes de carbone, (b1.2) consistant dans un monoacide carboxylique aliphatique saturé ayant de 1 à 6 atomes de carbone ;

. les proportions des constituants des concentrés sont choisies entre les limites suivantes (exprimant le pourcentage pondéral de chacun des constituants dans les concentrés) :

– de 3 % à 8 % de composé(s) fongicide(s) (a1),

– de 15 % à 40 % de composé(s) fongicide(s) (a2),

– de 0,1 % à 2 % de composé(s) fongicide(s) (a3),

– une quantité égale ou supérieure à 50 % de solvants (b1) avec la double condition selon laquelle d'une part la composition du couple de solvants obligatoires (b1.1) + (b1.2) est telle qu'il renferme 60 à 95 % en poids de solvant (b1.1) et 40 à 5 % en poids de solvant (b1.2) et d'autre part, quand on utilise des mélanges ayant plus de deux solvants, la proportion du couple de solvants (b1.1) + (b1.2) représente au moins 50 % du poids total des mélanges possibles,

– de 0 % à 20 % d'huile(s) (b2) et/ou d'agent(s) de fixation (b3).

2. Procédé selon la revendication 1, caractérisé en ce que, dans l'étape (i), le concentré est préparé de la manière suivante :

(1) - on dissout dans le véhicule liquide B), constitué par le milieu de dissolution (b1) + éventuellement une (ou plusieurs) huile(s) (b2) + éventuellement un (ou plusieurs) agent(s) de fixation (b3), le (ou les) composé(s) fongicide(s) (a2) en chauffant l'ensemble à une température comprise entre 30 °C et 60 °C, puis

(2) - on ajoute le (ou les) composé(s) fongicide(s) (a1) et on agite mécaniquement l'ensemble maintenu à la température précitée jusqu'à dissolution complète du (ou de) composé(s) (al), et enfin

(3) - on ajoute le (ou les) composé(s) fongicide(s) (a3) en maintenant toujours la température à la valeur précitée.

3. Procédé selon la revendication 1, caractérisé en ce que, dans l'étape (i), d'une part la matière active A) contient, en outre, (a4) au moins un composé insecticide insoluble dans l'eau, d'autre part le véhicule liquide B) renferme, en plus, un agent tensio-actif (b4) de nature non ionique, et enfin les proportions des constituants des concentrés sont choisies entre les limites suivantes (exprimant le pourcentage pondéral de chacun des constituants dans les concentrés) :

– de 3 % à 8 % de composé(s) fongicide(s) (a1),

– de 15 % à 40 % de composé(s) fongicide(s) (a2),

– de 0,1 % à 2 % de composé(s) fongicide(s) (a3),

– de 1 % à 10 % de composé(s) insecticide(s) (a4),

– une quantité égale ou supérieure à 20 % de solvants (b1) avec la double condition selon laquelle d'une part la composition du couple de solvants obligatoires (b1.1) + (b1.2) est telle qu'il renferme 60 à 95 % en poids de solvant (b.1) et 40 à 5 % en poids de solvant (b1.2) et d'autre part, quand on utilise des mélanges ayant plus de deux solvants, la proportion du couple de solvants (b1.1) + (b1.2) représente au moins 50 % du poids total des mélanges possibles,

– de 0 % à 20 % d'huile(s) (b2) et/ou d'agent(s) de fixation (b3), et

– de 5 % à 20 % d'agent tensio-actif (b4).

4. Procédé selon la revendication 3, caractérisé en ce que, dans l'étape (i), le concentré est préparé de la manière suivante :

(1') - on enchaîne les étapes (1), (2) et (3) définies ci-avant dans la revendication 2, puis

(2') - on laisse refroidir l'ensemble jusqu'à 20 °C, et

(3') - on ajoute successivement et sous agitation mécanique, d'une part l'agent tensio-actif (b4) et d'autre part le (ou les) composé(s) insecticide(s) (a4).

## Patentansprüche

### Patentansprüche für folgende Vertragsstaaten : AT, BE, CH, DE, FR, GB, IT, LI, LU, NL, SE

1. In Wasser emulgierbare, flüssige Konzentrate, die enthalten:

(A) eine wirkrame Menge eines Wirstoffs, bestehend aus

(a1) zumindert einer fungiziden Verbindung der Formel

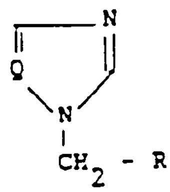

(I)

worin

. Q unter N und CH ausgewählt ist; und

. R unter den Resten

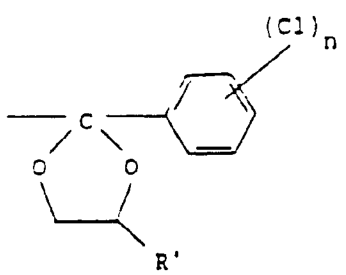

,

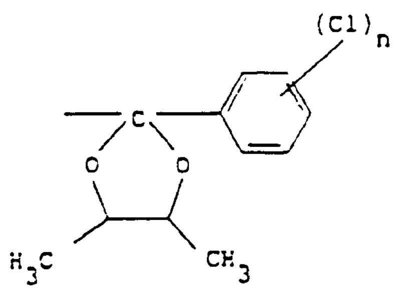

,

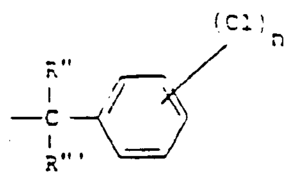

und

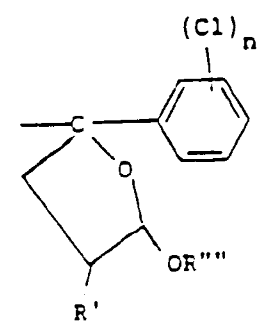

ausgewält ist, worin R' für ein Wasserstoffatom oder einen linearen oder verzweigten Alkyrest mit 1 bis 3 Kohlenstoffatomen steht; R'' für ein Wasserstoffatom, eine Hydroxyl- oder Cyanogruppe steht; R''' einen linearen oder verzweigten Alkylrest mit 1 bis 6 Kohlenstoffatomen (gegebenenfalls substituiert durch eine Cycloalkylgruppe oder eine Phenylgruppe), einen Alkenyloxyrest mit 3 bis 4 Kohlenstoffatomen oder einen Phenylrest (gegebenenfalls substitueiert durch ein oder mehrere Halogenatom(e)) beteutet; R'''' für ein Wasserstoffatom oder einen linearen oder verzweigten Alkylrest mit 1 bis 3 Kohlenstoffatomen (gegebenenfalls substituiert durch ein oder mehrere Halogenatom(e)) steht; n eine ganze Zahl entsprechend 1 oder 2 wiedergibt; und

(a2) zumindest einer fungiziden Verbindung der Formel

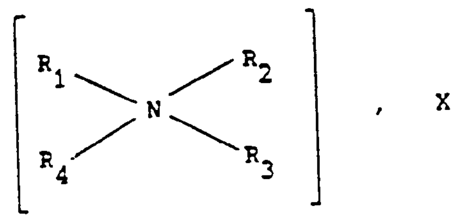

(II)

(kationischer Teil), (anionischer Teil)

worin:

. der kationische Teil des Salzes eine Gesamtzahl an Kohloenstoffatomen gleich oder niedriger als 50 aufweist und $R_1$, $R_2$, $R_3$, $R_4$ gleiche oder verschiedene organische Reste wiedergeben, deren freie Valenz durch ein Kohlenstoffatom getragen wird, wobei einer der Reste $R_1$, $R_2$, $R_3$ oder $R_4$ gegebenenfalls für ein Wasserstoffatom oder eine weitere Ammoniumgruppe stehen kann, wobei zwei dieser Reste gegebenenfalls gemeinsam einen einzigen zweiwertigen Rest bilden können, drei dieser Reste gegebenenfalls gemeinsam einen einzigen dreiwertigen Rest bilden können, zwei Paare dieser Reste gegebenenfalls gemeinsam zwei zweiwertige einzige Reste bilden können; und

. der anionische Teil X sich von einer Mineral- oder organischen Säure ableitet;

(B) und einen flüssigen Träger für den Wirkstoff, bestehend aus

(b1) dem Auflösungsmilieu des Wirkstoffs;

(b2) gegebenenfalls zumindest einem Öl; und

(b3) gegebenenfalls zumindest einem Mittel für die Fixierung;

wobei die Konzentrate durch die folgenden Punkte gekennzeichnet sind:

. der Wirkstoff (A) enthält außerdem (a3) zumindest eine fungizide Verbindung, ausgewählt unter:

+ einer Benzimidazolverbindung der Formel

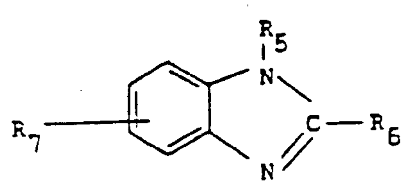

. (III)

worin:

– $R_5$ ein Wasserstoffatom oder eine Gruppe $-CO-NR_8R_9$ wiedergibt, wobei $R_8$ für ein Wasserstoffatom oder einen linearen oder verzweigten Alkylrest mit 1 bis 4 Kohlenstoffatomen steht und $R_9$ einen linearen oder verzweigten Alkylrest mit 1 bis 6 Kohlenstoffatomen, einen Phenylrest oder einen Benzylrest bedeutet, wobei ein jeder dieser Reste durch eine Niedrigalkylgruppe oder eine Niedrigalkoxygruppe substituiert sein kann;

– $R_6$ bedeutet: ein Wasserstoffatom; eine Aminogruppe $-NH_2$; eine Gruppe $-NH-CO-OR_8$ oder eine Gruppe $-NH-CO-NH-OR_8$, wobei $R_8$ einen Alkylrest mit der vorstehend angegebenen Definition bedeutet; oder eine 4-Thiazolylgruppe; wobei $R_8$ mit $R_8$ und den Kohlenstoffatomen, an die diese Reste gebunden sind, einen einzigen Ring bilden kann;

– $R_7$ ein Wasserstoffatom oder ein Hydroxylgruppe bedeutet;

* dem Gemisch einer oder mehrerer Verbindungen der Formel (III) mit ein oder mehreren Substitutionsderivaten von Isothiazolinon;

. das Auflösungsmilieu (b1) des Wirkstoffs umfaßt zumindest zwei obligatorische Lösungsmittel (b1.1) und (b1.2), wobei (b1.1) aus einem Ether eines niedrigen Alkanols mit 1 bis 4 Kohlenstoffatomen und einem gesättigten, aliphatischen Diol mit 2 bis 10 Kohlenstoffatomen besteht, und (b1.2) aus einer gesättigten, aliphatischen Monocarbonsäure mit 1 bis 6 Kohlenstoffatomen besteht; und

. die Anteile der Bestandteile der Konzentrate zwischen den folgenden Grenzen gewählt sind (die den

Gewichtsprozentanteil eines Jeden der bestandteile in den Konzentraten ausdrücken):

– 3% bis 8% fungizide Verbindung(en) (a1),
– 15% bis 40% fungizide Verbindung(en) (a2),
– 0,1% bis 2% fungizide Verbindung(en) (a3),
– eine Menge an Lösungsmitteln (b1) gleich oder höher als 50% unter des zweifachen Bedingung, daß einesteils die Zusammensetzung des Paars der obligatorischen Lösungsmittel (b1.1) + (b1.2) derart ist, daß sie 60-95 Gew.% Lösungsmittel (b1.1) und 40 bis 5 Gew.% Lösungsmittel (b1.2) unfaßt, und anderenteils, wenn man Gemische aus mehr als zwei Lösungsmittel (b1.1) + (b1.2) zumindest 50% des Gesamtgewichts der möglichen Gemische ausmacht,
– 0 bis 20% Öl(e) (b2) und/oder Fixierungsmittel (b3).

2. Konzentrate gemäß Anspruch 1, dadurch gekennzeichnet, daß die fungizide Substanz (a1) aus der Gruppe der Verbindungen der Formel (I), worin Q = N, entnommen ist.

3. Konzentrate gemäß einem der Ansprüche 1 und 2, dadurch gekennzeichnet, daß die fungizide Substanz (a2) aus der Gruppe der quaternären Ammoniumsalze der Formel (II) entnommen ist, worin

. die verschiedenen Reste $R_1$, $R_2$, $R_3$ und $R_4$ darstellen können:

– aliphatische (lineare oder verzweigte), cycloaliphatische, aromatische (vom Aryl- oder arylaliphatiten Typ), gesättigte oder ungesättigte Kohlenwasserstoffreste,
– Reste, die mehrere Oxyalkylenketten enthalten, der Formel

$$-R_{10}-(O-R_{10}-)_t-OH$$

worin t zwischen 1 und 10 liegt und $R_{10}$ einen Rest $-CH_2-$, $-CH_2-CH_2-$ oder $-CH_2-CH(CH_3)-$ wiedergibt,

. einer der Reste $R_1$, $R_2$, $R_3$ oder $R_4$ einen quäternären Ammoniumrest der Formel

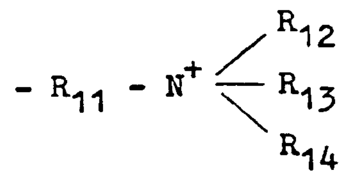

bedeuten kann, worin $R_{12}$, $R_{13}$ und $R_{14}$ Kohlenwasserstoffreste oder Reste mit Oxyalkylengruppen, wie zuvor für $R_1$, $R_2$ $R_3$ und $R_4$ definiert, darstellen une $R_{11}$ ein aliphati rcher oder aromatischer, zweiwertiger Kohlenwasserstoffrert ist, dessen Kohlenstoffkette oder Kohlenstoffketten durch Sauerstoffatome unterbrochen sein kann bzw. können, wobei die freien Valenzen des Restes $R_{11}$ durch Kohlenstoffatome mit aliphatischem Charackter getrager werden;

. ein oder mehrere Paare der Reste $R_1$, $R_2$, $R_3$ und $R_4$ können eizige zweiwertige Alkylen- oder Oxyalkylenreste bilden können;

. der anionische Teil X sich von einer Monooder Polysäure mineralischen oder organischen Ursprungs ableitet, von der zumindest eine der sauren Funktionen eine Ionisationskonstante in Wasser, pka, von geringer als oder gleich 7 besitzt.

4. Konzentrate gemäß einem der Ansprüche 1 bis 3, dadurch gekennzeichnet, daß das Auflösungsmilieu (b1) des Wirkstoffs ist:

– ein ternäres Gemisch des Typs (b1.1) + (b1.2) + (b1.3), worin (b1.3) aus einem gesättigten, aliphatischen Diol mit 2 bis 10 Kohlenstoffatomen besteht; oder des Typs (b1.1) + (b1.2) + $H_2O$;
– oder ein quaternäres Gemish des Typs (b1.1) + (b1.2) + (b.13) + $H_2O$.

5. Konzentrate gemäß einem der Ansprüche 1 bis 4, dadurch gekennzeichnet, daß einesteils der Wirkstoff (A) außerdem (a4) zumindest eine in Wasser unlösliche, insektizide Verbindung enthält, anderenteils der flüssige Träger (B) außerdem ein oberflächenaktives Mittel (b4) nicht-ionischer Natur enthält und schließlich die Anteile der Bestandteile der Konzentrate zwischen den folgenden Grenzen (die den Gewichtsprozentanteil eines jeden der Bestandteile in den Konzentraten ausdrücken) gewählt sind:

– 3 bis 8% fungizide Verbindung(en) (a1),
– 15 bis 40% fungizide Verbindung(en) (a2),
– 0,1 bis 0,2% fungizide Verbindung(en) (a3),
– 1 bis 10% insektzide Verbindung(en) (a4),
– eine Menge entsprechend oder höher als 20% Losungsmittel (b1) mit der zweifachen Bedingung, dergemäß einesteils die Zusammensetzung der Paare der obligatorischen Lösungsmittel (b1.1) + (b1.2) derart ist, daß sie 60 bis 95 Gew.% Lösungsmittel (b.1) und 40 bis 5 Gew.% Lösungsmittel (b1.2) umfaßt, und

anderenteils, wenn man Gemische mit mehr als zwei Lösungsmitteln verwendet, der Anteil des Paares der Lösungsmittel (b1.1) + (b1.2) zumindest 50% des Gesamtgewichts der möglichen Gemische beträgt,
– 0 bis 20% Öl(e) (b2) und/oder Mittel für die Fixierung (b3) und
– 5 bis 20% oberflächenaktives Mittel (b4).

6. Wäßrige Mikroemulsionen, dadurch gekennzeichnet, daß sie durch einfache Zugabe unter Rühren von 1 Gew.Teil eines Konzentrats gemäß einem der vorhergehenden Ansprüche 1 bis 5 mit 9 bis 49 Gew.Teilen Wasser erhalten werden.

7. Verwendung der Mikroemulsionen gemäß Anspruch 6 zur Gewährleistung eines Schutzes von frish geschlagenem und gesägtem Holz gegenüber der Blaufäule in der Tiefe und Schimmelbildungen an der Oberfläche und gegebenenfalls Insekten.

**Patentanspruch für folgenden Vertragsstaat : ES**

1. Verfahren zur Herstellung von bioziden, wäßrigen Mikroemulsionen für den Schutz von frisch geschlagenem und gesägtem Holz gegenüber der Blaufäule in der Tiefe und der Entwicklung von Schimmelbildung an der Oberfläche und gegebenenfalls Insekten, welches aus den folgenden Stufen besteht
(i) man stellt ein in Wasser emulgierbares, flüssiges Konzentrat her, enthaltend:
(A) eine wirksame Menge eines Wirkstoff, bestehend aus
(a1) zumindest einer fungiziden Verbindung der Formel

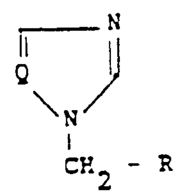

(I)

worin
. Q unter N und CH ausgewählt ist; und
. R unter den Resten

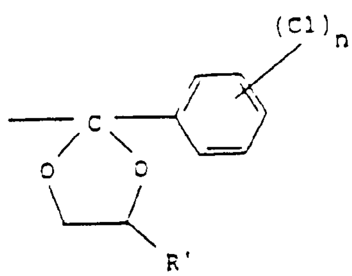
,
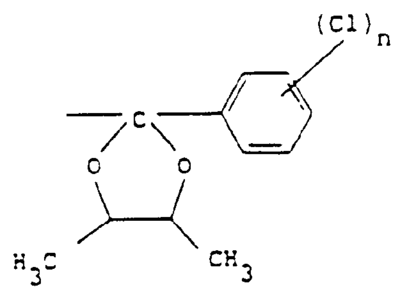
,
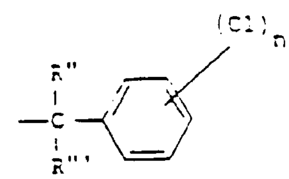

und
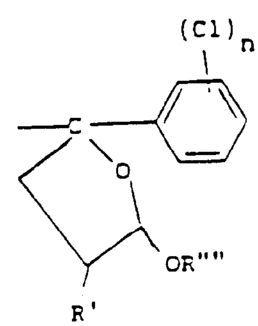

ausgewählt ist, worin R′ für ein Warserstoffatom oder einen linearen oder verzweigten Alkylrest mit 1 bis 3 Kohlenstoffatomen steht; R″ für ein Wasserstoffatom, eine Hydroxyl- oder Cyanogruppe steht; R‴ einen linearen oder verzweigten Alkylrest mit 1 bis 6 Kohlenstoffatomen (gegebenenfalls

substituiert durch eine Cycloalkylgruppe oder eine Phenylgruppe), einen Alkenyloxyrest mit 3 bis 4 Kohlenstoffatomen oder einen Phenylrest (gegebenenfalls substituiert durch ein oder mehrere Halogenatom(e)) bedeutet; R'''' für ein Warrerstoffatom oder einen linearen oder verzweigten Alkylrest mit 1 bis 3 Kohlenstoffatomen (gegebenenfalls substituiert durch ein oder mehrere Halogenatom(e)) steht; n eine ganze Zahl entsprechend 1 oder 2 wiedergibt; und

(a2) zumindert einer fungiziden Verbindung der Formel

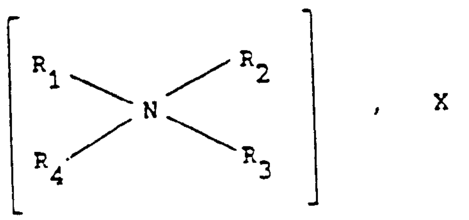

(II)

(kationischer Teil), (anionischer Teil)

worin:

. der kationische Teil des Salzes eine Gesamtzahl an Kohlenstoffatomen gleich oder niedriger als 50 aufweist und $R_1$, $R_2$, $R_3$, $R_4$ gleiche oder verschiedene organiche Reste wiedergeben, deren freie Valenz durch ein Kohlenstoffatom getragen wird, wobei einer der Reste $R_1$, $R_2$, $R_3$ oder $R_4$ gegebenenfalls für ein Wasserstoffatom oder eine weitere Ammoniumgruppe stehen kann, wobei zwei dieser Reste gegebenenfalls gemeinsam einen einzigen zweiwertigen Rest bilden können, drei dieser Reste gegebenenfalls gemeinsam einen einzigen dreiwertigen Rest bilden können, zwei Paare dieser Reste gegebenenfalls gemeinsam zwei zweiwertige einzige Reste bilden können; und

. der anionische Teil X sich von einer Mineral- oder organischen Säure ableiteit;

(B) und einen flüssigen Träger für den Wirkstoff, bestehend aus

(b1) dem Auflösungsmilieu des Wirkstoffs;

(b2) gegebenenfalls zumindest einem Öl; und

(b3) gegebenenfalls zumindest einem Mittel für die Fixierung

(2i) dann unterzieht man dar durch Zugabe von 1 Gew.-Teil des in Stufe (i) erhaltenen, flüssigen Konzentrats in 9 bis 49 Gew.Teilen Wasser erhaltene Gemisch einem Rühren, wobei dieses Verfahren dadurch gekennzeichnet ist, daß in stufe (i):

. der Wirkstoff (A) außerdem (a3) zumindest eine fungizide Verbindung enthält, ausgewählt unter:

* einer Benzimidazolverbindung der Formel

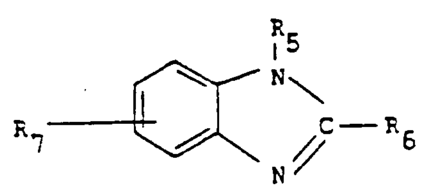

(III)

worin

. $R_5$ ein Wasserstoffatom oder eine Gruppe -CO-NR$_8$R$_9$ wiedergibt, wobei $R_8$ für ein Wasserstoffatom oder einen linearen oder verzweigten Alkylrest mit 1 bis 4 Kohlenstoffatomen steht und $R_9$ einen linearen oder verzweigten Alkylrest mit 1 bis 6 Kohlenstoffatomen, einen Phenylrest oder einen Benzylrest bedeutet, wobei ein jeder dieser Reste durch eine Niedrigalkylgruppe oder ein Niedrigalkoxygruppe substituiert sein kann;

. $R_5$ bedeutet: ein Wasserstoffatom; eine Aminogruppe -$NH_2$; eine Gruppe -NH-CO-OR$_5$ oder eine Gruppe -NH-CO-NH-OR$_5$, wobei $R_8$ einen Alkylrest mit der vorstehend angegebenen Definition bedeutet; oder eine 4-Thiazokylgruppe; wobei $R_5$ mit $R_5$ und den Kohlenstoffatomen, an die diese Reste gebunden sind, einen einzigen Ring bilden kann;

. $R_7$ ein Wasserstoffatom oder ein Hydroxylgruppe bedeutet;

* dem Gemisch einer oder mehrerer Verbindungen der Formel (III) mit ein oder mehreren Substitutionsderivaten von Isothiazolinon; und

. das Auflösungsmilieu (b1) des Wirkstoffs zumindest zwei obligatorische Lösungsmittel (b1.1) und (b1.2) umfaßt, wobei (b1.1) aus einem Ether eines niedrigen Alkanols mit 1 bis 4 Kohlenstoffatomen und einem gesättigten, aliphatischen Diol mit 2 bis 10 Kohlenstoffatomen besteht, und (b1.2) aus einer gesättigten, aliphatischen Monocarbonsäure mit 1 bis 6 Kohlenstoffatomen besteht;

. die Anteile der Bestandteile der Konzentrate zwischen den folgenden Grenzen gewält sind (die den Gewichtsprozentanteil eines jeden der Bestandteile in den Konzentraten ausdrücken):

– 3% bis 8% fungizide Verbindung(en) (a1),
– 15% bis 40% fungizide Verbindung(en) (a2),
– 0,1% bis 2% fungizide Verbindung(en) (a3),
– eine Menge an Lösungsmitteln (b1) gleich oder höher als 50% unter der zweifachen Bedingung, daß einesteils die Zusammensetzung des Paars der obligatorischen Lösungsmittel (b1.1) + (b1.2) derart ist, daß sie 60 bis 95 Gew.% Lösungsmittel (b1.1) und 40 bis 5 Gew.% Lösungsmittel (b1.2) umfaßt, und anderenteils, wenn man Gemische aus mehr als zwei Lösungsmitteln verwendet, der Anteil des Paars der Lösungsmittel (b1.1) + (b1.2) zumindest 50% des Gesamtgewichts der möglichen Gemische ausmacht,
– 0% bis 20% Öl(e) (b2) und/oder Fixierungsmittel (b3).

2. Verfahren gemäß Anspruch 1, dadurch gekennzeichnet, daß in der Stufe (i) das Konzentrat auf folgende Weise hergestellt wird:

(1) man löst in dem flüssigen Träger (B), bestehend aus dem Auflösungsmilieu (b1) + gegebenenfalls einem (oder mehreren) Öl(en) (b2) + gegebenenfalls einem (oder mehreren) Mittel(n) zur Fixierung (b3), die fungizide(n) Verbindung(en) (a2), wobei man das Ganze auf eine Temperatur zwischen 30 und 60°C erhitzt, danach

(2) man gibt die fingizide(n) Verbindung(en) (a1) zu und rührt mechanisch das Ganze bei der vorstehenden Temperatur gehaltene bis zur vollständigen Auflösung der Verbindung(en) (a1) und schließlich

(3)man gibt die fungizide(n) Verbindung(en) (a3) zu, wobei man ständig die Temperatur bei dem vorstehenden Wert hält.

3. Verfahren gemäß Anspruch 1, dadurch gekennzeichnet, daß in Stufe (i) einesteils der Wirkstoff (A) außerdem (a4) zumindest eine in Wasser unlösliche, insektizide Verbindung enthält, anderenteils der flüssige Träger (B) außerdem ein oberflächenaktives Mittel (b4) nicht-ionischer Natur enthält, und schließlich die Anteile der Bestandteile der Konzentrate zwischen den folgenden Grenzen (die den Gewichtsprozentanteil eines jeden der Bestandteile in den Konzentraten ausdrücken gewählt sind:

– 3% bis 8% fungizide Verbindung(en) (a1),
– 15% bis 40% fungizide Verbindung(en) (a2),
– 0,1 bis 2% fungizide Verbindung(en) (a3),
– 1 bis 10% insektizide Verbindung(en) (a4),
– eine Menge an Lösungmitteln (b1) gleich oder höher als 20% unter der zweifachen Bedingung, daß einesteils die Zusammensetzung des Paars der obligatorischen Lösungsmittel (b1.1) + (b1.2) derart ist, daß sie 60 bis 95 Gew.% Lösungsmittel (b1.1) und 40 bis 5 Gew.% Lösungsmittel (b1.2) umfaßt, und anderenteils, wenn man Gemische aus mehr als zwei Lösungmitteln verwendet, der Anteil des Paars der Lösungsmittel (b1.1) + (b1.2) zuminsdest 50% des Gesamtgewichts der möglichen Gemische ausmacht,
– 0 bis 20% Öl(e) (b2) und/oder Fixierungsmittel (b3) und
– 5 bis 20% oberflächenaktives Mittel (b4).

4. Verfahen gemäß Anspruch 3, dadurch gekenzeichnet, daß in Stufe (i) das Konzentrat auf die folgende Weise hergestellt wird:

(1') - man verbindet die vorstehend in Anspruch 2 definierten Stufen (1), (2) und (3), hiernach

(2') - läßt man das Ganze auf 20°C abkühlen und

(3') - gibt sukzessive und unter mechanischem Rühren einesteils das oberflächenaktive Mittel (b4) und anderenteils das (oder die) insektizide(n) Verbindungen(en) (a4) zu.

## Claims

### Claims for the following Contracting States : AT, BE, CH, DE, FR, GB, GR, IT, LI, LU, NL, SE

1. Concentrated liquids which can be emulsified in water, comprising:

A) an effective amount of an active substance consisting of:

(a1) at least one fungicidal compound of the formula:

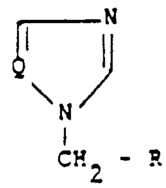

(I)

in which:

. Q is selected from the group consisting of N and CH; and

. R is selected from the group consisting of the radicals:

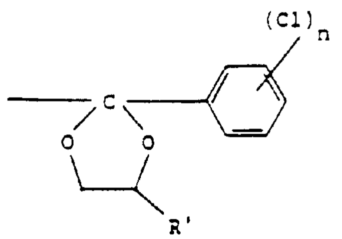

,

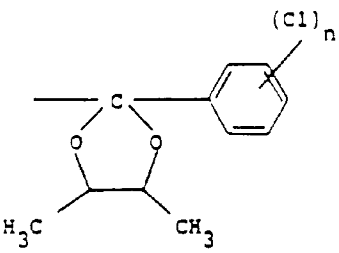

,

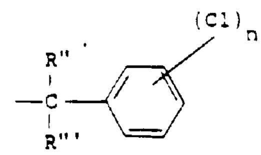

,

and

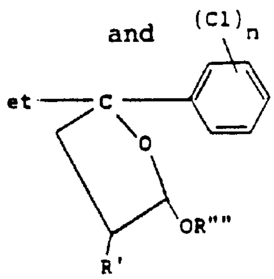

in which : R′ represents a hydrogen atom or a linear or branched alkyl radical having from 1 to 3 carbon atoms; R″ represents a hydrogen atom or a hydroxyl or cyano group; R‴ represents a linear or branched alkyl radical having from 1 to 6 carbon atoms (optionally substituted with a cycloalkyl group or a phenyl group), an alkenyloxy radical having from 3 to 4 carbon atoms or a phenyl radical (optionally substituted with one or more halogen atom(s)); R″″ represents a hydrogen atom or a linear or branched alkyl radical having from 1 to 3 carbon atoms (optionally substituted with one or more halogen atom(s)); n is an integer equal to 1 or 2; and

(a2) at least one fungicidal compound of the formula:

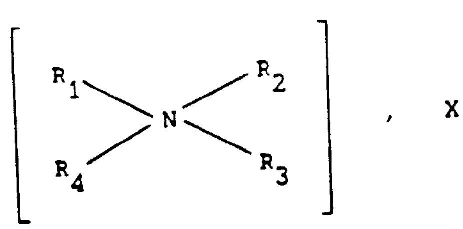

(II)

(cationic portion) , (anionic portion)

in which:

. the cationic portion of the salt possesses a total number of carbon atoms not exceeding 50 and $R_1$, $R_2$, $R_3$ and $R_4$ represent identical or different organic radicals whose free valency is carried by a carbon atom, it being possible for one of the radicals $R_1$, $R_2$, $R_3$ or $R_4$ optionally to represent a hydrogen atom or another ammonium group, it being possible for two of these radicals optionally to form together a single divalent radical, it being possible for three of these radicals optionally to form together a single trivalent radical, it being possible for two pairs of these radicals optionally to form together two single divalent radicals; and

. the anionic portion X is derived from an inorganic or organic acid;

B) and a liquid vehicle for the active substance consisting of:

(b1) the dissolution medium for the active substance;

(b2) optionally at least one oil, and

(b3) optionally at least one binding agent; said concentrates being characterised by the following points:

. the active substance A) contains, in addition, (a3) at least one fungicidal compound selected from the group consisting of:

* a benzimidazole compound of the formula:

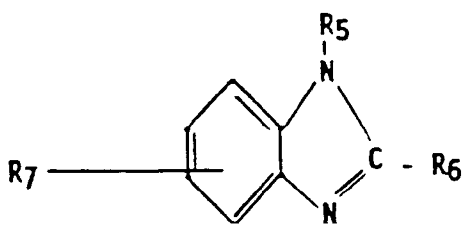

(III)

in which:

– $R_5$ represents a hydrogen atom or a group $-CO-NR_8R_9$, with $R_8$ representing a hydrogen atom or a linear or branched alkyl radical having from 1 to 4 carbon atoms and with $R_9$ representing a linear or branched alkyl radical having from 1 to 6 carbon atoms, a phenyl radical or a benzyl radical, it being possible for each of these radicals to be substituted with a lower alkyl group or a lower alkoxy group;

– $R_6$ represents: a hydrogen atom; an amino group $-NH_2$; a group $-NH-CO-OR_8$ or a group $-NH-CO-NH-OR_8$ with $R_8$ being an alkyl radical having the definition given above; or a 4-thiazolyl group; it being possible for $R_6$, with $R_8$ and the atoms to which these radicals are linked, to form a single ring;

– $R_7$ represents a hydrogen atom or a hydroxyl group;

* a mixture of one or more of the compounds of formula (III) with one or more substitution derivatives of isothiazolinone;

. the dissolution medium (b1) for the active substance comprises at least two obligatory solvents (b1.1) and (b1.2), (b1.1) consisting of an ether of a lower alkanol having from 1 to 4 carbon atoms and of a saturated aliphatic diol having from 2 to 10 carbon atoms, (b1.2) consisting of a saturated aliphatic monocarboxylic acid having from 1 to 6 carbon atoms; and

. the proportions of the constituents of the concentrates are selected to be between the following limits (expressing the weight percentage of each of the constituents in the concentrates):

– from 3 % to 8 % of fungicidal compound(s) (a1),

– from 15 % to 40 % of fungicidal compound(s) (a2),

– from 0.1% to 2 % of fungicidal compound(s) (a3),

– an amount of not less than 50% of solvents (b1) with the dual condition according to which, on the one hand the composition of the pair of obligatory solvents (b1.1) + (b1.2) is such that it contains 60 to 95% by weight of solvent (b1.1) and 40 to 5 % by weight of solvent (b1.2), and on the other hand, when mixtures having more than two solvents are used, the proportion of the pair of solvents (b1.1) + (b1.2) represents at least 50 % of the total weight of the possible mixtures,

– from 0 % to 20 % of oil(s) (b2) and/or of binding agent(s) (b3).

2. Concentrates according to Claim 1, characterised in that the fungicidal substance (a1) is taken from the group of the compounds of formula (I) in which Q = N.

3. Concentrates according to either of Claims 1 and 2, characterised in that the fungicidal substance (a2) is taken from the group of the quaternary ammonium salts of formula (II) in which:

. the various radicals $R_1$, $R_2$, $R_3$ and $R_4$ can represent:

– saturated or unsaturated aliphatic (linear or branched), cycloaliphatic or aromatic (of the aryl or arylaliphatic type) hydrocarbon radicals;

– radicals containing several oxyalkylene arrangements of formula:

$$-R_{10}-(O-R_{10}-)_t-OH$$

where t is between 1 and 10 and $R_{10}$ represents a $-CH_2-$, $-CH_2-CH_2-$ or $-CH_2-CH(CH_3)-$ radical;

. one of the radicals $R_1$, $R_2$, $R_3$ or $R_4$ can represent a quaternary ammonium radical of formula:

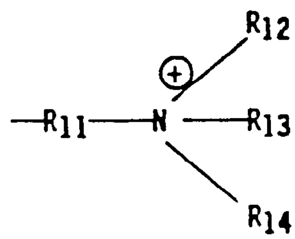

where $R_{12}$, $R_{13}$, and $R_{14}$ represent hydrocarbon radicals or radicals containing oxyalkylene groups as defined above for $R_1$, $R_2$, $R_3$ and $R_4$, and $R_{11}$ is a divalent aliphatic or aromatic hydrocarbon radical in which the carbon chain or chains may be interrupted by oxygen atoms, the free valencies of the radical $R_{11}$ being carried by carbon atoms of an aliphatic nature;

. one or more pairs of radicals $R_1$, $R_2$, $R_3$ and $R_4$ can form single divalent alkylene or oxyalkylene radicals;

. the anionic portion X is derived from a mono-or polybasic acid of inorganic or organic origin in which at least one of the acid functions possesses an ionisation constant in water, pKa, not exceeding 7.

4. Concentrates according to any one of Claims 1 to 3, characterised in that the dissolution medium (b1) for the active substance is:

– a ternary mixture of the type: (b1.1) + (b1.2) + (b1.3), where (b1.3) consists of a saturated aliphatic diol having from 2 to 10 carbon atoms; or of the type: (b1.1) + (b1.2) + $H_2O$;

– or a quaternary mixture of the type: (b1.1) + (b1.2) + (b1.3) + $H_2O$.

5. Concentrates according to any one of Claims 1 to 4, characterised in that, on the one hand the active substance A) contains, in addition, (a4) at least one water-insoluble insecticidal compound, on the other hand the liquid vehicle B) additionally contains a surfactant (b4) of nonionic nature, and finally the proportions of the constituents of the concentrates are selected to be between the following limits (expressing the weight percentage of each of the constituents in the concentrates):

– from 3 % to 8 % of fungicidal compound(s) (a1),

– from 15 % to 40 % of fungicidal compound(s) (a2),

– from 0.1% to 2 % of fungicidal compound(s) (a3),

– from 1 % to 10 % of insecticidal compound(s)(a4),

– an amount of not less than 20 % of solvents (b1) with the dual condition according to which, on the one hand the composition of the pairs of obligatory solvents (b1.1) + (b1.2) is such that it contains 60 to 95 % by weight of solvent (b1.1) and 40 to 5 % by weight of solvent (b1.2), and on the other hand, when mixtures having more than two solvents are used, the proportion of the pair of solvents (b1.1) + (b1.2) represents at least 50 % of the total weight of the possible mixtures,

– from 0 % to 20 % of oil(s) (b2) and/or of binding agent(s) (b3), and

– from 5 % to 20 % of surfactant (b4).

6. Aqueous microemulsions, characterised in that they are obtained by simple addition, with stirring, of 1 part by weight of a concentrate according to any one of Claims 1 to 5 above to 9 to 49 parts by weight of water.

7. Use of the microemulsions according to Claim 6 to provide for protection of freshly felled and sawn timber against blue stain penetrating throughout the wood and surface moulds and, where appropriate, against insects.

**Claims for the following Contractint State : ES**

1. Process for preparing biocidal aqueous microemulsions intended for the protection of freshly felled and sawn timber against blue stain penetrating throughout the wood and the growth of surface moulds and, where appropriate, against insects which consists of the following steps:

(i) a concentrated liquid which can be emulsified in water is prepared, comprising:

A) an effective amount of an active substance consisting of:

(a1) at least one fungicidal compound of the formula:

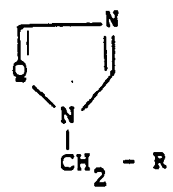

(I)

in which:

. Q is selected from the group consisting of N and CH; and

. R is selected from the group consisting of the radicals:

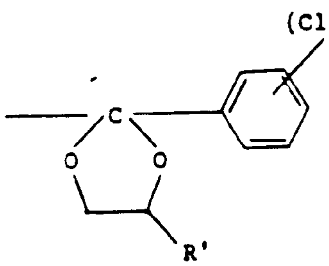 , 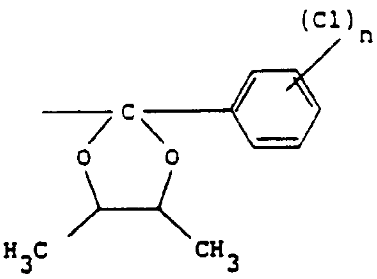 , 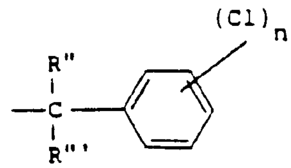

and

et 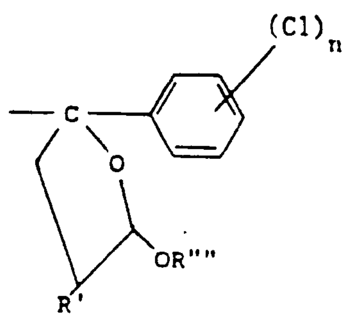

in which : R′ represents a hydrogen atom or a linear or branched alkyl radical having from 1 to 3 carbon atoms; R″ represents a hydrogen atom or a hydroxyl or cyano group; R‴ represents a linear or branched alkyl radical having from 1 to 6 carbon atoms (optionally substituted with a cycloalkyl group or a phenyl group), an alkenyloxy radical having from 3 to 4 carbon atoms or a phenyl radical (optionally substituted with one or more halogen atom(s)); R″″ represents a hydrogen atom or a linear or branched alkyl radical having from 1 to 3 carbon atoms (optionally substituted with one or more halogen atom(s)); n is an integer equal to 1 or 2; and

(a2) at least one fungicidal compound of the formula:

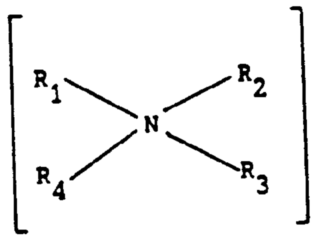

, X

(II)

(cationic portion) , (anionic portion)

in which:

. the cationic portion of the salt possesses a total number of carbon atoms not exceeding 50 and $R_1$, $R_2$, $R_3$ and $R_4$ represent identical or different organic radicals whose free valency is carried by a carbon atom, it being possible for one of the radicals $R_1$, $R_2$, $R_3$ or $R_4$ optionally to represent a hydrogen atom or another ammonium group, it being possible for two of these radicals optionally to form together a single divalent radical, it being possible for three of these radicals optionally to form together a single trivalent radical, it being possible for two pairs of these radicals optionally to form together two single divalent radicals; and

. the anionic portion X is derived from an inorganic or organic acid;

B) and a liquid vehicle for the active substance consisting of:

(b1) the dissolution medium for the active substance;

(b2) optionally at least one oil, and

(b3) optionally at least one binding agent;

(ii) and the mixture obtained by adding one part by weight of the liquid concentrate derived from step (i) to 9 to 49 parts by weight of water is then subjected to stirring,

. the said process being characterised in that, in step (i):

. the active substance A) contains, in addition, (a3) at least one fungicidal compound selected from the group consisting of:

* a benzimidazole compound of the formula:

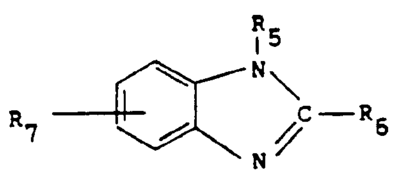

(III)

in which:

. $R_5$ represents a hydrogen atom or a group $-CO-NR_8R_9$, with $R_8$ representing a hydrogen atom or a linear or branched alkyl radical having from 1 to 4 carbon atoms and with $R_9$ representing a linear or branched alkyl radical having from 1 to 6 carbon atoms, a phenyl radical or a benzyl radical, it being possible for each of these radicals to be substituted with a lower alkyl group or a lower alkoxy group;

. $R_5$ represents: a hydrogen atom; an amino group $-NH_2$; a group $-NH-CO-OR_5$ or a group $-NH-CO-NH-OR_5$ with $R_8$ being an alkyl radical having the definition given above; or a 4-thiazolyl group; it being possible for $R_6$, with $R_5$ and the atoms to which these radicals are linked, to form a single ring;

. $R_7$ represents a hydrogen atom or a hydroxyl group;

* a mixture of one or more of the compounds of formula (III) with one or more substitution derivatives of isothiazolinone;

. the dissolution medium (b1) for the active substance comprises at least two obligatory solvents (b1.1) and (b1.2), (b1.1) consisting of an ether of a lower alkanol having from 1 to 4 carbon atoms and of a saturated aliphatic diol having from 2 to 10 carbon atoms, (b1.2) consisting of a saturated aliphatic monocarboxylic acid having from 1 to 6 carbon atoms; and

. the proportions of the constituents of the concentrates are selected to be between the following limits (expressing the weight percentage of each of the constituents in the concentrates):

– from 3 % to 8 % of fungicidal compound(s) (a1),
– from 15 % to 40 % of fungicidal compound(s) (a2),
– from 0.1% to 2 % of fungicidal compound(s) (a3),
– an amount of not less than 50 % of solvents (b1) with the dual condition according to which, on the one hand the composition of the pair of obligatory solvents (b1.1) + (b1.2) is such that it contains 60 to 95 % by weight of solvent (b1.1) and 40 to 5 % by weight of solvent (b1.2), and on the other hand, when mixtures having more than two solvents are used, the proportion of the pair of solvents (b1.1) + (b1.2) represents at least 50 % of the total weight of the possible mixtures,
– from 0 % to 20 % of oil(s) (b2) and/or of binding agent(s) (b3).

2. Process according to Claim 1, characterised in that, in step (i), the concentrate is prepared in the following manner:

(1) - the fungicidal compound(s) (a2) is/are dissolved in the liquid vehicle B), consisting of the dissolution medium (b1) + optionally one (or more) oil(s)
(b2) + optionally one (or more) binding agent(s) (b3), by heating the whole to a temperature of between 30°C and 60°C, then
(2) - the fungicidal compound(s) (a1) is/are added and the whole, maintained at the abovementioned temperature, is stirred mechanically until the compound(s) (a1) has/have dissolved completely, and finally
(3) - the fungicidal compound(s) (a3) is/are added while the temperature is still maintained at the abovementioned value.

3. Process according to Claim 1, characterised in that, in step (i), on the one hand the active substance A) contains, in addition, (a4) at least one water-insoluble insecticidal compound, on the other hand the liquid vehicle B) additionally contains a surfactant (b4) of nonionic nature, and finally the proportions of the constituents of the concentrates are selected to be between the following limits (expressing the weight percentage of each of the constituents in the concentrates):

– from 3 % to 8 % of fungicidal compound(s) (a1),
– from 15 % to 40 % of fungicidal compound(s) (a2),
– from 0.1% to 2 % of fungicidal compound(s) (a3),
– from 1 % to 10 % of insecticidal compound(s)(a4),
– an amount of not less than 20 % of solvents (b1) with the dual condition according to which, on the one hand the composition of the pair of obligatory solvents (b1.1) + (b1.2) is such that it contains 60 to 95 % by weight of solvent (b1.1) and 40 to 5 % by weight of solvent (b1.2), and on the other hand, when mixtures having more than two solvents are used, the proportion of the pair of solvents (b1.1) + (b1.2) represents at least 50 % of the total weight of the possible mixtures,
– from 0 % to 20 % of oil(s) (b2) and/or of binding agent(s) (b3), and
– from 5 % to 20 % of surfactant (b4).

4. Process according to Claim 3, characterised in that, in step (i), the concentrate is prepared in the following manner:

(1′) - steps (1), (2) and (3) defined above in Claim 2, are performed in sequence, then
(2′) - the whole is allowed to cool to 20°C, and
(3′) - on the one hand the surfactant (b4), and on the other hand the insecticidal compound(s) (a4), are added successively and with mechanical stirring.